(19) Europäisches Patentamt
European Patent Office
Office européen des brevets

(11) **EP 3 590 902 B1**

(12) **EUROPÄISCHE PATENTSCHRIFT**

(45) Veröffentlichungstag und Bekanntmachung des Hinweises auf die Patenterteilung:
**03.03.2021 Patentblatt 2021/09**

(51) Int Cl.:
**C03C 3/085** *(2006.01)*     **C03C 3/087** *(2006.01)*
**C03C 4/20** *(2006.01)*

(21) Anmeldenummer: **19183173.4**

(22) Anmeldetag: **28.06.2019**

(54) **HOCH BESTÄNDIGE UND CHEMISCH VORSPANNBARE GLÄSER**

HIGHLY DURABLE AND CHEMICALLY PRESTRESSABLE GLASSES

VERRES À RÉSISTANCE ÉLEVÉE ET POUVANT ÊTRE PRÉCONTRAINTS CHIMIQUEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2018 DE 102018116460**

(43) Veröffentlichungstag der Anmeldung:
**08.01.2020 Patentblatt 2020/02**

(73) Patentinhaber: **SCHOTT AG**
**55122 Mainz (DE)**

(72) Erfinder:
• **Fotheringham, Ulrich**
**65191 Wiesbaden (DE)**
• **Nass, Peter**
**55120 Mainz (DE)**
• **Schwall, Michael**
**Knoxville, TN Tennessee 37934 (US)**
• **Mix, Christian**
**84036 Landshut (DE)**
• **Dahlmann, Ulf**
**84034 Landshut (DE)**

(74) Vertreter: **Fuchs Patentanwälte Partnerschaft mbB**
**Westhafenplatz 1**
**60327 Frankfurt am Main (DE)**

(56) Entgegenhaltungen:
EP-A1- 3 360 852        DE-A1-102009 051 852
US-A1- 2010 035 745     US-A1- 2014 050 911
US-A1- 2015 030 827     US-B2- 9 718 721

## Beschreibung

Die Erfindung betrifft Gläser und Glasprodukte, die chemische Vorspannbarkeit mit sehr guter Lauge- und Säurebeständigkeit, hydrolytischer Beständigkeit sowie einem gewünschten thermischen Ausdehnungskoeffizienten vereinen. Erfindungsgemäß sind auch Herstellungsverfahren solcher Gläser und ihre Verwendungen.

## Stand der Technik

Chemisch vorspannbare Gläser werden für viele Anwendungen benötigt, insbesondere für Anwendungen in den Bereichen pharmazeutischer Packmittel oder berührungsempfindlicher Displays ("touch panel"). Dabei wird im Allgemeinen noch ein bestimmter thermischer Ausdehnungskoeffizient verlangt und es darf trotz der wegen der Vorspannbarkeit i.a. in großer Zahl vorhandenen Natriumionen kein Kompromiß bzgl. der Alkali-, der hydrolytischen und der Säurebeständigkeit eingegangen werden. Für die Charakterisierung der chemischen Beständigkeit gibt es eine Fülle von Vorschriften und Normen, insbesondere ISO 695 für die Laugenbeständigkeit, ISO 719/720 für die hydrolytische sowie ISO 1776 und DIN 12116 für die Säurebeständigkeit.

DE 10 2015 116 097 A1, US 9,783,453 B2, US 2015/030827 A1, US 9,701,580 B2, US 9,156,725 B2, US 9,517,967 B2, US 2014/050911 A1, US 9,822,032 B2, US 2015/147575 A1, US 2015/140299 A1, WO 15/031427 A2, US 2017/320769 A1, WO 17/151771 A1, US 2016/251255A1, DE 102013 114 225A1 lehren Gläser, die für die Verwendung im Bereich "touch panel" bestimmt sind. Die dort beschriebenen Gläser heben bzgl. der chemischen Vorspannbarkeit allerdings hauptsächlich auf einen großen Anteil an glasartigem Albit (12,5 Mol% $Na_2O$, 12,5 Mol% $Al_2O_3$, 75 Mol% $SiO_2$) als konstituierender Phase ab und lassen anderen Phasen, die auf die chemische Vorspannbarkeit einen günstigen Einfluß nehmen können, wenig Spielraum.

Die Auswahl von glasartigem Albit als Hauptbestandteil ist aufgrund der hohen Beweglichkeit von Natriumionen in diesem Glassystem erfolgt, die eine große Austauschtiefe (typisch 30-50$\mu$m) bei der chemischen Vorspannung durch den Austausch Natrium gegen Kalium erreichen läßt. (Auch das Mineral Albit weist übrigens eine hohe Beweglichkeit der Natriumionen auf.) Die Höhe der Vorspannung in der oberflächennahen Schicht hängt nicht von dieser Beweglichkeit ab, sondern von der Natriumkonzentration im Ausgangsglas.

Da die große Beweglichkeit der Natriumionen im Albitglas mit dem hohen Anteil an Aluminium verknüpft ist und ein hoher Aluminiumanteil die Säurebeständigkeit dramatisch senkt, ist es sinnvoll, neben Albitglas auch andere Natriumquellen heranzuziehen, die eine große Natriumbeweglichkeit versprechen, z.B. Dinatriumzinksilicat.

## Aufgabe

Im Stand der Technik fehlt es an Gläsern, die chemische Vorspannbarkeit mit einer guten chemischen Beständigkeit verbinden. Zusätzlich sollen diese Gläser über gewünschte thermische Ausdehnungseigenschaften verfügen. Die Gläser sollten zudem in modernen Rohrzugfertigungsverfahren oder Flachglasziehverfahren herstellbar sein.

Die Aufgabe wird durch die Gegenstände der Patentansprüche gelöst.

## Beschreibung der Erfindung

Die Aufgabe wird durch eine gezielte Kombination von stöchiometrischen Gläsern, also Gläsern, die in derselben Stöchiometrie auch als Kristalle existieren und deren Eigenschaft wegen der - wie in der Literatur an vielen Beispielen durch NMR-Messungen o.ä. überprüft - identischen Topologie der Baugruppen jeweils für Glas und Kristall als sehr ähnlich angenommen werden können, gelöst. Hierfür werden solche stöchiometrischen Gläser ausgewählt, deren Mischung ein Verhalten im Sinne einer Lösung der erfindungsgemäßen Aufgabe erzielbar macht. In dieser Anmeldung werden diese stöchiometrischen Gläser auch als "konstituierende Phasen" bezeichnet.

Es ist kein neues Konzept, Gläser anhand der ihnen zuzuordnenden konstituierenden Phasen zu beschreiben. Durch die Angabe der Grundgläser lassen sich Rückschlüsse auf die chemische Struktur eines Glases ziehen (vgl. Conradt R: "Chemical structure, medium range order, and crystalline reference state of multicomponent oxide liquids and glasses", in Journal of Non-Crystalline Solids, Volumes 345-346, 15 October 2004, Pages 16-23).

Die vorliegende Erfindung betrifft in einer ersten Ausführungsform ein Glas mit einer Zusammensetzung, die durch die folgenden das Glas konstituierenden Phasen gekennzeichnet ist, dabei wird dieses durch die konstituierenden Phasen definierte Grundsystem erfindungsgemäß durch die angegebenen Zusammensetzungsbereiche eingeschränkt:

### Tabelle 1

| konstituierende Phase | Min (Mol%) | Max (Mol%) |
|---|---|---|
| Albit | 20 | 60 |

(fortgesetzt)

| konstituierende Phase | Min (Mol%) | Max (Mol%) |
|---|---|---|
| Siliziumdioxid | 0 | 40 |
| Orthoklas | 0 | 20 |
| Wollastonit | 0 | 10 |
| Enstatit | 0 | 20 |
| Parakeldyshit | 0 | 20 |
| Narsarsukit | 0 | 20 |
| Dinatriumzinksilicat | 0 | 40 |
| Cordierit | 0 | 20 |
| Strontiumsilicat | 0 | 10 |
| Bariumsilicat | 0 | 10 |

Die Anteile weiterer Komponenten an dem Glas betragen höchstens 1 Mol-%.

Die Grundsysteme beziehen sich ausdrücklich auf die jeweils genannten konstituierenden Phasen und nicht auf die einfachen Oxide. Jedoch folgt aus der Aufgabenstellung und der Wahl der konstituierenden Phasen, dass die Gläser bevorzugt höchstens 12,5 Mol % $Al_2O_3$ enthalten, um eine vorteilhafte Lösung im Raum dieser konstituierenden Phasen zu erlauben. Gläser, die nach Umrechnung in die Oxidzusammensetzung mehr als 12,5 Mol% Aluminiumoxid aufweisen, sind somit vorzugsweise nicht Teil dieser Erfindung.

Ferner soll das erfindungsgemäße Glas weitere Bedingungen erfüllen, die mit der Zusammensetzung aus konstituierenden Phasen bzw. der Zusammensetzung aus einfachen Oxiden in formelmäßigen Zusammenhängen stehen, die weiter unten aufgezeigt werden.

Da beide Sorten Zusammenhänge - solche zur in konstituierenden Phasen angegebenen Zusammensetzung und solche zur in einfachen Oxide angegebenen Zusammensetzung - nebeneinander verwendet werden, geben wir zunächst Umrechnungsmatrizen für die gegenseitige Umrechnung beider Zusammensetzungsangaben an.

**Umrechnung von der Zusammensetzung aus konstituierenden Phasen in Zusammensetzung aus einfachen Oxiden und umgekehrt**

Die Zusammensetzung aus konstituierenden Phasen wird zum Zweck der Umrechnung in einer normierten Form angegeben, die da lautet:

**Tabelle 2**

| konstituierende Phase | Formel (auf ein einfaches Oxid normiert) |
|---|---|
| Albit | $(Na_2O \cdot Al_2O_3 \cdot 6SiO_2)/8$ |
| Siliziumdioxid | $SiO_2$ |
| Orthoklas | $(K_2O \cdot Al_2O_3 \cdot 6SiO_2)/8$ |
| Wollastonit | $(CaO \cdot SiO_2)/2$ |
| Enstatit | $(MgO \cdot SiO_2)/2$ |
| Parakeldyshit | $(Na_2O \cdot ZrO_2 \cdot 2SiO_2)/4$ |
| Narsarsukit | $(Na_2O \cdot TiO_2 \cdot 4SiO_2)/6$ |
| Dinatriumzinksilicat | $(Na_2O \cdot ZnO \cdot 3SiO_2)/5$ |
| Cordierit | $(2MgO \cdot 2Al_2O_3 \cdot 5SiO_2)/9$ |
| Strontium silicat | $(SrO \cdot SiO_2)/2$ |
| Bariumsilicat | $(BaO \cdot SiO_2)/2$ |

Die Umrechnung dieser Zusammensetzungen in eine Zusammensetzungsangabe in Mol-% bezüglich der folgenden einfachen Oxide ...

**Tabelle 3**

| # | Oxid |
|---|------|
| 1. | $SiO_2$ |
| 2. | $TiO_2$ |
| 3. | $ZrO_2$ |
| 4. | $Al_2O_3$ |
| 5. | ZnO |
| 6. | MgO |
| 7. | CaO |
| 8. | SrO |
| 9. | BaO |
| 10. | $Na_2O$ |
| 11. | $K_2O$ |

... erfolgt mit Hilfe der hier angegebenen Matrix. Dabei wird die Zusammensetzungsangabe in Mol-% hinsichtlich der Grundgläser als Spaltenvektor von rechts an die Matrix multipliziert:

**Tabelle 4: Matrix**

$$\begin{pmatrix} 6/8 & 1 & 6/8 & 1/2 & 1/2 & 2/4 & 4/6 & 3/5 & 5/9 & 1/2 & 1/2 \\ 0 & 0 & 0 & 0 & 0 & 0 & 1/6 & 0 & 0 & 0 & 0 \\ 0 & 0 & 0 & 0 & 0 & 1/4 & 0 & 0 & 0 & 0 & 0 \\ 1/8 & 0 & 1/8 & 0 & 0 & 0 & 0 & 0 & 2/9 & 0 & 0 \\ 0 & 0 & 0 & 0 & 0 & 0 & 0 & 1/5 & 0 & 0 & 0 \\ 0 & 0 & 0 & 0 & 1/2 & 0 & 0 & 0 & 2/9 & 0 & 0 \\ 0 & 0 & 0 & 1/2 & 0 & 0 & 0 & 0 & 0 & 0 & 0 \\ 0 & 0 & 0 & 0 & 0 & 0 & 0 & 0 & 0 & 1/2 & 0 \\ 0 & 0 & 0 & 0 & 0 & 0 & 0 & 0 & 0 & 0 & 1/2 \\ 1/8 & 0 & 0 & 0 & 0 & 1/4 & 1/6 & 1/5 & 0 & 0 & 0 \\ 0 & 0 & 1/8 & 0 & 0 & 0 & 0 & 0 & 0 & 0 & 0 \end{pmatrix} \times \begin{pmatrix} (Na_2O \cdot Al_2O_3 \cdot 6SiO_2)/8 \\ SiO_2 \\ (K_2O \cdot Al_2O_3 \cdot 6SiO_2)/8 \\ (CaO \cdot SiO_2)/2 \\ (MgO \cdot SiO_2)/2 \\ (Na_2O \cdot ZrO_2 \cdot 2SiO_2)/4 \\ (Na_2O \cdot TiO_2 \cdot 4SiO_2)/6 \\ (Na_2O \cdot ZnO \cdot 3SiO_2)/5 \\ (2MgO \cdot 2Al_2O_3 \cdot 5SiO_2)/9 \\ (SrO \cdot SiO_2)/2 \\ (BaO \cdot SiO_2)/2 \end{pmatrix}$$

Als Ergebnis der Multiplikation des Spaltenvektors an die Matrix erhält man die Zusammensetzung des Glases in Molprozenten.

Umgekehrt lässt sich eine Zusammensetzung in Molprozenten einfach über die jeweilige inverse Matrix in eine Grundglaszusammensetzung überführen. Dabei gelten natürlich nur solche Grundglaszusammensetzungen als erfindungsgemäß, die bei Umrechnung keine negativen Werte für die Grundgläser ergeben.

**Bedeutung der konstituierenden Phasen und deren Auswahl im Hinblick auf die Aufgabe der Erfindung**

Die Zusammensetzung ist im Hinblick auf die das Glas konstituierenden Phasen innerhalb der hierin beschriebenen Grenzen gewählt. Die das Glas konstituierenden Phasen liegen als solche im Glasprodukt selbstverständlich nicht kristallin, sondern amorph vor. Das heißt aber nicht, dass die konstituierenden Phasen im amorphen Zustand völlig andere Baugruppen als im kristallinen Zustand haben. Wie oben gesagt, ist die Topologie der Baugruppen vergleichbar, also z.B. die Koordination der beteiligten Kationen mit umgebenden Sauerstoffatomen oder der sich aus der Koordination und der Stärke der Bindung zwischen diesen Kationen und umgebenden Sauerstoffatomen ergebende interatomare Abstand. Daher lassen sich viele Eigenschaften des Glases der Erfindung gut anhand der konstituierenden Phasen beschreiben, insbesondere um die erfinderische Leistung und die mit der Erfindung überwundenen Probleme darzustellen (vgl. dazu Conradt R., loc. cit.). Dabei kann das Glas natürlich nicht nur unter Verwendung der entsprechenden Kristalle hergestellt werden, sondern auch unter Verwendung der üblichen Glasrohstoffe, solange nur die stöchiometrischen Verhältnisse die Ausbildung der entsprechenden Baugruppen der Grundgläser ermöglichen.

Die Auswahl der Phasen erfolgt im Hinblick auf Eignung zum Ionentransport oder einen förderlichen Einfluß auf den Ionentransport sowie ihren Einfluss auf die hydrolytische Beständigkeit sowie die thermische Ausdehnung. Im folgenden werden Berechnungsverfahren angegeben, wie sich diese Größen aus einer vorgegebenen Zusammensetzung aus konstituierenden Phasen berechnen lassen. Diese Berechnungsverfahren sind maßgeblich sowohl bei der Auswahl der konstituierenden Phasen als auch bei eben jener Zusammensetzung eines erfindungsgemäßen Glases aus diesen konstituierenden Phasen.

Sowohl die hydrolytische Beständigkeit nach ISO 719/720 als auch die Laugenbeständigkeit nach ISO 695 beinhalten im wesentlichen eine Resistenz des Glases gegen den Angriff von Hydroxylionen. Dabei ist im Falle der ISO 695 die Konzentration der Hydroxylionen in der Lauge dadurch festgelegt, daß eine Pufferlösung mit 0,5 mol/l Natriumhydroxid und 0,25 mol/l Natriumcarbonat verwendet wird. Im Falle der ISO 719/720 wird das Glas in Neutralwasser gegeben, dessen pH-Wert zunächst auf 5,5 eingestellt wird (Überprüfung durch Methylrotindikatorlösung), sich aber durch die Auflösung des Glases sehr rasch in den alkalischen Bereich bewegt. Es entsteht eine Pufferlösung aus den im Glas enthaltenen schwachen Säuren (bzw. Säureanhydriden), v.a. Kieselsäure, und starken Laugen (wie Natriumhydroxid), deren pH im Bereich 9 bis 10 liegt, siehe Susanne Fagerlund, Paul Ek, Mikko Hupa und Leena Hupa: On determining chemical durability of glasses, Glass Technol.: Eur. J. Glass Sci. Technol. A, December 2010, 51 (6), 235-240. Maßgeblich für den pH einer Pufferlösung sind die pKs-Werte der schwachen Säure(n). Durch den pH-Wert der entstehenden Pufferlösung, der sowohl vom Glastyp abhängt als auch mit dem Auflösungsfortschritt steigt, wird die Konzentration der Hydroxylionen festgelegt. Die durch diese Hydroxylionen erfolgende Auflösung erfolgt dann nach demselben Mechanismus wie bei der Laugenbeständigkeitsmessung.

Um ein Glas sowohl laugen- als auch hydrolytisch resistent zu machen, muss damit erstens die Abtragrate beim Test nach ISO 695 auf einen niedrigen Wert festgelegt werden. Zweitens muss der pH-Wert begrenzt werden, der sich während eines Tests nach ISO 719/720 und der dabei erfolgenden Auflösung einer gewissen Glasmenge in der wässrigen Testlösung ergibt. Je höher dieser pH-Wert im Verlaufe des Testes steigt, desto größer ist die Gefahr eines positiven Rückkopplungseffektes: mit steigendem pH steigt die Abtragrate, mit steigender Menge Abtrag in der wässrigen Lösung steigt wiederum deren pH-Wert an usw.

Chemisch beständige Gläser (hydrolytische Klasse HGB I gemäß ISO 719 bzw. hydrolytische Klasse HGA I gemäß ISO 720) erfahren während des Testes typischerweise einen Abtrag, der zu 100 $\mu$mol Glas in der wässrigen Lösung oder weniger führt, wobei der Abtrag im Allgemeinen umso weniger kongruent ist, je geringer er ist.

Da sich ein Vergleich von Gläsern auf feste Verhältnisse beziehen muss, definieren wir jetzt als maßgeblichen pH denjenigen pH, der sich nach als kongruent angenommener Auflösung von 50 $\mu$mol Glas in Neutralwasser ergibt.

Erfindungsgemäß bevorzugt sind Gläser, bei denen dieser pH weniger als 9,1 bzw. bevorzugt weniger als 9,05 bzw. besonders bevorzugt weniger als 9,0 beträgt.

Die Abtragrate entsprechend ISO 695 beträgt erfindungsgemäß bevorzugt maximal 105 mg/(dm$^2$3h), bevorzugt maximal 100 mg/(dm$^2$3h), besonders bevorzugt maximal 95 mg/(dm$^2$3h), ganz besonders bevorzugt maximal 90 mg/(dm$^2$3h), am meisten bevorzugt maximal 85 mg/(dm$^2$3h). Gemeint ist die Abtragrate, die sich anhand der Formeln (2) und (3) für Gläser dieser Erfindung berechnen lässt.

Schon der erste o.a. genannte Wert liegt um mehr als eine halbe Klassenbreite unterhalb der Grenze zwischen den Laugenklassen 2 und 3 gemäß der ISO 695. Dieser Abstand wird bewußt so groß gewählt, um auch bei eventuellen Toleranzen bei der Vorhersagegenauigkeit der Formeln (2) und (3) noch einen großen Sicherheitsabstand zur Klasse 3 zu haben.

Der thermische Ausdehnungskoeffizient liegt erfindungsgemäß bevorzugt zwischen 4 und 8 ppm/K, bevorzugt zwischen 4,5 und 7ppm/K, besonders bevorzugt zwischen 4,8 und 6,5ppm/K. Gemeint ist der Wert CTE, der sich anhand der Formel (8) für Gläser dieser Erfindung berechnen lässt.

Bezüglich der Abtragrate in Säure gemäß DIN12116 läßt sich sagen, daß diese bei den erfindungsgemäßen Gläsern einer wie unten definierten Kennzahl < 200 einer Säureklasse 3 und weniger entspricht und dass sie bei einer Kennzahl > 215 rasch ansteigt, mit z.T. um mehrere Zehnerpotenzen über der Grenze zwischen den Klassen 3 und 4 liegenden Abtragwerten. Dazwischen ist ein Übergangsbereich. Erfindungsgemäß bevorzugt sind Gläser mit einer Kennzahl < 200, bevorzugt < 199, besonders bevorzugt < 198, ganz besonders bevorzugt < 197, noch weiter bevorzugt < 196, am meisten bevorzugt < 195.

**Berechnung des pH-Wertes in der wässrigen Lösung beim Test der hydrolytischen Beständigkeit**

Die Berechnung des pH-Wertes in wässriger Lösung geht von der Zusammensetzungsangabe in einfachen Oxiden aus. In der verdünnten Lösung der Glasbestandteile gehen die entsprechenden Kationen in die höchstoxidierten Hydroxide über, siehe die Tabelle 5. Die Abgabe eines H$^+$ bzw. OH$^-$ dieser Hydroxide wird jeweils durch einen entsprechenden pKs- bzw. pKb-Wert beschrieben.

Wir beziehen uns beim pH-Wert auf den Wert, der nach Auflösung von 50 $\mu$mol in einem Liter der wässrigen Lösung nach Abkühlung auf Raumtemperatur (25°C) vorliegt.

**Tabelle 5**

| # | Oxid bzw. Anhydrid | Säure bzw. Hydroxid | | |
|---|---|---|---|---|
| 1. | $SiO_2$ | $H_4SiO_4$ | $H_4SiO_4 \rightarrow H_3SiO_4^- + H^+$ | pKs = 9,7[1] |
| | | | $H_3SiO_4^- \rightarrow H_2SiO_4^{-2} + H^+$ | pKs = 11,9 [1] |
| 2. | $ZrO_2$ | $Zr(OH)_4$ | $Zr(OH)_4 + H_2O \rightarrow Zr(OH)_5^- + H^+$ | pKs = 5,99 [2] |
| | | | $Zr(OH)_3^+ + H_2O \rightarrow Zr(OH)_4 + H^+$ | pKs = 4,6 [2] |
| 3. | $Al_2O_3$ | $Al(OH)_3$ | $Al(OH)_3 + H_2O \rightarrow Al(OH)_4^- + H^+$ | pKs = 12,3 [3] |
| | | | $Al(OH)_2^+ + H_2O \rightarrow Al(OH)_3 + H^+$ | pKs = 5,7 [3] |
| 4. | $ZnO$ | $Zn(OH)_2$ | $Zn^{+2} + H_2O \rightarrow ZnOH^+ + H^+$ | pKs = 9,05 [4] |
| | | | $ZnOH^+ + H_2O \rightarrow Zn(OH)_2 + H^+$ | pKs = 9,75 [4] |
| | | | $Zn(OH)_2 + H_2O \rightarrow Zn(OH)_3^- + H^+$ | pKs = 10,1 [4] |
| | | | $Zn(OH)_3^- + H_2O \rightarrow Zn(OH)_4^- + H^+$ | pKs = 10,05 [4] |
| 5. | $MgO$ | $Mg(OH)_2$ | $Mg(OH)_2 \rightarrow Mg(OH)^+ + OH^-$ | pKb = -2 [5] |
| | | | $Mg(OH)^+ \rightarrow Mg^{++} + OH^-$ | pKb = 2,58 [6] |
| 6. | $CaO$ | $Ca(OH)_2$ | $Ca(OH)_2 \rightarrow Ca(OH)^+ + OH^-$ | pKb = -2 [5] |
| | | | $Ca(OH)^+ \rightarrow Ca^{++} + OH^-$ | pKb = 1,3 [7] |
| 7. | $Na_2O$ | $NaOH$ | $NaOH \rightarrow Na^+ + OH^-$ | pKb = -0,77 [10] |
| 8. | $K_2O$ | $KOH$ | $KOH \rightarrow K^+ + OH^-$ | pKb = -2 [11] |
| 10. | $SrO$ | $Sr(OH)_2$ | $Sr(OH)_2 \rightarrow Sr(OH)^+ + OH^-$ | pKb = -2 [5] |
| | | | $Sr(OH)^+ \rightarrow Sr^{++} + OH^-$ | pKb = 0,82 [12] |
| 11. | $BaO$ | $Ba(OH)_2$ | $Ba(OH)_2 \rightarrow Ba(OH)^+ + OH^-$ | pKb = -2 [5] |
| | | | $Ba(OH)^+ \rightarrow Ba^{++} + OH^-$ | pKb = 0,64 [13] |

[1]) Pure Appl. Chem., 1969, Vol. 20, No. 2, pp. 133-236, Ziffer 176; Wert von der dort mit "G40" bezeichneten Quelle.
[2]) R.H. Byrne, Inorganic speciation of dissolved elements in seawater: the influence of pH on concentration ratios, Geochem. Trans. 3 (2) (2002) 11-16.
[3]) David W. Hendricks, Water Treatment Unit Processes: Physical and Chemical, CRC Taylor and Francis, Boca Raton, London, New York, 2006, S. 307; Werte von den dort mit "4", "5", "11", "12" bezeichneten Quellen.
[4]) Artur Krezel, Wolfgang Maret, The biological inorganic chemistry of zinc ions, Archives of Biochemistry and Biophysics (2016), S. 1-17
[5]) Wie bei Bariumhydroxid, siehe Pure Appl. Chem., 1969, Vol. 20, No. 2, pp. 133-236, Ziffer 12, gehen wir davon aus, dass die $M(OH)_2 \rightarrow M(OH)^+ + OH^-$ für alle Erdalkali M in jedem Fall vollständig abläuft; wir setzen für diese erste Dissoziation als pKb-Wert den höchsten in dieser Tabelle auftretenden pKb-Wert, nämlich den von Kalilauge, an.
[6]) Pure Appl. Chem., 1969, Vol. 20, No. 2, pp. 133-236, Ziffer 115; Wert von der dort mit "S74" bezeichneten Quelle.
[7]) Pure Appl. Chem., 1969, Vol. 20, No. 2, pp. 133-236, Ziffer 18; Wert von der dort mit "D9" bezeichneten Quelle.
[10]) Pure Appl. Chem., 1969, Vol. 20, No. 2, pp. 133-236, Ziffer 178; Wert von der dort mit "G26" bezeichneten Quelle.
[11]) Pure Appl. Chem., 1969, Vol. 20, No. 2, pp. 133-236, Ziffer 164; Wert von der dort mit "K2" bezeichneten Quelle.
[12]) Pure Appl. Chem., 1969, Vol. 20, No. 2, pp. 133-236, Ziffer 180; Wert von der dort mit "G26" bezeichneten Quelle.
[13]) Pure Appl. Chem., 1969, Vol. 20, No. 2, pp. 133-236, Ziffer 12; Wert von der dort mit "D7" bezeichneten Quelle.

Der pH-Wert folgt bei gegebener Zusammensetzung durch Lösen des Gleichungssystems für die verschiedenen Konzentrationen [...] (für pKs und pKb sind die oben gelisteten Werte einzusetzen):

Gleichungssystem (1)

1. $[H_2SiO_4^{--}]\,[H^+] / [H_3SiO_4^-] = 10^{-pks}$,

2. $[H_3SiO_4^-]\,[H^+] / [H_4SiO_4] = 10^{-pks}$,

3. $[H_2SiO_4^{--}] + [H_3SiO_4^-] + [H_4SiO_4] = 50\ (\mu mol/l) * CSiO_2$,

4. $[Zr(OH)_5^-]\,[H^+] / [Zr(OH)_4] = 10^{-pks}$,

5. $[Zr(OH)_4]\,[H^+] / [Zr(OH)_3^+] = 10^{-pks}$,

6. $[Zr(OH)_5^-] + [Zr(OH)_4]^+\,[Zr(OH)_3]^+ = 50\ (\mu mol/l) * CZrO_2$,

7. $[Al(OH)_4^-]\,[H^+] / [Al(OH)_3] = 10^{-pks}$

8. $[Al(OH)_3]\,[H^+] / [Al(OH)_2^+] = 10^{-pks}$,

9. $[Al(OH)_4^-] + [Al(OH)_3] + [Al(OH)_2^+] = 50\ (\mu mol/l) * 2 * CAl_2O_3$,

10. $[ZnOH^+]\,[H^+] / [Zn^{++}] = 10^{-pks}$,

11. $[Zn(OH)_2]\,[H^+] / [ZnOH^+] = 10^{-pks}$,

12. $[Zn(OH)_3^-]\,[H^+] / [Zn(OH)_2] = 10^{-pks}$,

13. $[Zn(OH)_4^{--}]\,[H^+] / [Zn(OH)_3^-] = 10^{-pks}$,

14. $[ZnOH^+] + [Zn^{++}] + [Zn(OH)_2] + [Zn(OH)_3^-] + [Zn(OH)_4^{--}] = 50\ (\mu mol/l) * c_{ZnO}$,

15. $[MgOH^+]\,[OH^-] / [Mg(OH)_2] = 10^{-pkb}$

16. $[Mg^{++}]\,[OH^-] / [MgOH^+] = 10^{-pkb}$,

17. $[MgOH^+] + [Mg(OH)_2] + [Mg^{++}] = 50\ (\mu mol/l) * c_{MgO}$,

18. $[CaOH^+]\,[OH^-] / [Ca(OH)_2] = 10^{-pkb}$

19. $[Ca^{++}]\,[OH^-] / [CaOH^+] = 10^{-pkb}$,

20. $[CaOH^+] + [Ca(OH)_2] + [Ca^{++}] = 50\ (\mu mol/l) * c_{CaO}$,

21. $[SrOH^+]\,[OH^-] / [Sr(OH)_2] = 10^{-pkb}$

22. $[Sr^{++}]\,[OH^-] / [SrOH^+] = 10^{-pkb}$,

23. $[SrOH^+] + [Sr(OH)_2] + [Sr^{++}] = 50\ (\mu mol/l) * c_{SrO}$,

24. $[BaOH^+]\,[OH^-] / [Ba(OH)_2] = 10^{-pkb}$

25. $[Ba^{++}]\,[OH^-] / [BaOH^+] = 10^{-pkb}$,

26. $[BaOH^+] + [Ba(OH)_2] + [Ba^{++}] = 50\ (\mu mol/l) * c_{BaO}$,

27. $[Na^+]\,[OH^-] / [NaOH] = 10^{-pkb}$,

28. $[Na^+] + [NaOH] = 50$ ($\mu$mol/l) $* 2 * CNa_2O$,

29. $[K^+] [OH^-] / [KOH] = 10^{-pkb}$,

30. $[K^+] + [KOH] = 50$ ($\mu$mol/l) $* 2 * CK_2O$,

31. $[OH^-] [H^+] = 10^{-14}$,

32. $2*[H_2SiO_4^{--}] + [H_3SiO_4^-] + [Zr(OH)_5^-] + [Al(OH)_4^-] + 2*[Zn(OH)_4^{--}] + [Zn(OH)_3^-] + [OH^-] = [Zr(OH)_3^+] + [Al(OH)_2^+]$ $+ 2*[Zn^{++}] + [ZnOH^+] + 2*[Ba^{++}] + [BaOH^+] + 2*[Sr^{++}] + [SrOH^+] + 2*[Ca^{++}] + [CaOH^+] + 2*[Mg^{++}] + [MgOH^+] +$ $[Na^+] + [K^+] + [H^+]$

Die Gleichungen 1 - 31 sind Gleichgewichtsbedingungen, und Gleichung 32 ist die Elektroneutralitätsbedingung.

Das Gleichungssystem ist mit einem der gängigen mathematischen Codes wie z.B. MATHEMATICA von Wolfram Research Inc. eindeutig lösbar. MATHEMATICA liefert eine Liste von Lösungen, von denen jedoch nur eine die notwendige Zusatzbedingung erfüllt, dass alle Konzentrationen positive Werte haben müssen.

Der pH-Wert folgt definitionsgemäß als negativer dekadischer Logarithmus von $[H^+]$. Wir nehmen noch zur Kenntnis, daß bei Raumtemperatur pks + pkb = 14 gilt.

## Berechnung der Laugenbeständigkeit nach ISO 695

Der Erfindung liegt an dieser Stelle ein überraschenderweise gefundener Zusammenhang zwischen einer mit Hilfe von topologischen Betrachtungen konstruierten Größe und der beim Test nach der ISO 695 gemessenen Abtragrate zugrunde.

Wesen topologischer Betrachtungen ist, wie beispielsweise in DE 10 2014 119 594 A1 ausführlich dargelegt, die den Atomen durch die Bindung zu den Nachbaratomen auferlegten Zwangsbedingungen abzuzählen. Diese Zwangsbedingungen betreffen zum einen Teil den interatomaren Abstand ("Abstandsbedingungen"), zum anderen die Bindungswinkel ("Winkelbedingungen"). Hat ein Atom r Nachbarn (r = Koordinationszahl), so folgen aus den r Abstandsbedingungen zu diesen Nachbarn r/2 diesem Atom zuzuordnende Abstandsbedingungen, wenn man die Abstandsbedingungen gleich unter beiden Bindungspartnern verteilt. Aus den Bindungswinkeln zwischen diesen Nachbarn, mit dem betrachteten Atom an der Spitze des jeweiligen Winkels, folgen weitere 2r-3 Winkelbedingungen, die diesem Atom zuzuordnen sind.

In DE 10 2014 119 594 A1 ist ein Verfahren beschrieben, das bei der Berechnung der Abstands- und Winkelbedingungen eine Wichtung aller Bedingungen mit der Einzelbindungsstärke und noch einmal eine zusätzliche Wichtung der Winkelbedingungen (nur die von den Sauerstoff-Kation-Sauerstoff-Winkeln herrührenden; die zu den Kation-Sauerstoff-Kation-Winkeln gehörenden Bedingungen werden vernachlässigt) mit dem Kovalenzgrad der jeweiligen Bindung vorsieht. Dabei sind die Wichtungsfaktoren normiert, indem jeweils durch die Einzelbindungsstärke bzw. den Kovalenzgrad der Silicium-Sauerstoffbindung geteilt wird, so dass sich für Quarzglas eine Zahl von (gerundet) 1,333333333 (d.h. 4/3) Abstandsbedingungen und (gerundet) 1,666666667 (d.h. 5/3) Winkelbedingungen pro Atom ergibt. Das entspricht, wie in DE 10 2014 119 594 A1 dargelegt, der direkten Analyse der Topologie von Quarzglas, wenn man alle Abstands- und Winkelbedingungen einfach zählt und die Winkelbedingungen der Silicium-Sauerstoff-Silicium-Winkel vernachlässigt.

Damit hat Quarzglas eine Zahl von "3" Zwangsbedingungen pro Atom, was genau der Zahl der Freiheitsgrade pro Atom entspricht. Quarzglas sollte also keine (oder realiter: eine sehr geringe) Zahl von Freiheitsgraden pro Atom haben, was dem geringen $c_p$-Sprung von Quarzglas beim differenzkalorimetrisch gemessenen Glasübergang entspricht, siehe R. Brüning, "On the glass transition in vitreous silica by differential thermal analysis measurements", Journal of Non-Crystalline Solids 330 (2003) 13-22.

Für andere oxidische Gläser ergeben sich im Allgemeinen niedrigere Werte für die Zahlen der Abstands- und Winkelbedingungen pro Atom als (gerundet) 1,333333333 (4/3) bzw. 1,666666667 (5/3). Die Differenzen sind entsprechend die Anzahlen der Abstands- bzw. Winkelfreiheitsgrade pro Atom. Bei den Winkelfreiheitsgraden kann man noch unterscheiden, ob die zugehörigen Winkelbedingungen sich auf Winkel beziehen, die alle in einer Ebene liegen (trigonale Koordination) oder nicht (tetraedrische oder höhere Koordination). Letztere werden hier als 3D-Winkel-bedingungen bezeichnet; die Differenz zu (gerundet) 1,666666667 (4/3) entsprechend als 3D-Winkelfreiheitsgrade.

Überraschenderweise findet man einen Zusammenhang zwischen der Zahl der 3D-Winkelfreiheitsgrade pro Atom und der Abtragrate r beim ISO 695 Test, mit dem man die Lage eines Glases bezüglich der Laugenbeständigkeitsklassen einschätzen kann. Dieser speziell für die Anwendbarkeit auch auf hoch alkalihaltige Gläser optimierte und an einer Vielzahl von Gläsern ausgetestete Zusammenhang ist gegeben durch:

$$r = c \cdot \left( \frac{M}{M_{SiO_2}} \cdot \frac{N}{N_{SiO_2}} \right) \cdot \left( (1+f)^6 + c' \right) \cdot (0{,}9483333 - \Lambda) \qquad (2)$$

"c" ist eine Konstante mit Dimension mg/(dm²3h); der numerische Wert lautet 163,9. "f" ist die Zahl der 3D-Winkelfreiheitsgrade pro Atom. "c'" ist eine dimensionslose Konstante mit Wert 1,8. Der Exponent "6" ist empirisch gefunden worden. Λ ist die optische Basizität.

Der Faktor $N/N_{SiO_2}$ dient der Umrechnung von einer Atomgruppe, an der die obige Wahrscheinlichkeitsüberlegung gemacht worden ist, auf ein Mol. N ist die Zahl der Atome pro Mol. $NSiO_2$ ist die Zahl der Atome pro Mol Quarzglas (nämlich $3N_A$, $N_A$ Avogadrozahl) und dient der Normierung dieses Ausdruckes. Man kann diesen Faktor ohne großen Fehler gleich einer Konstanten setzen und diese Konstante in den Vorfaktor "c" hineinziehen, wenn man sich nur innerhalb einer eng umschriebenen Glasfamilie bewegt. Der Faktor $M/M_{SiO_2}$ dient der Umrechnung der obigen atomaren Betrachtung auf eine Massenbetrachtung. M ist die Masse eines Mols. $MSiO_2$ ist die Masse eines Mols Quarzglas (nämlich 60,08g) und dient der Normierung dieses Ausdruckes. Man kann auch diesen Faktor ohne großen Fehler gleich einer Konstanten setzen und diese Konstante in den Vorfaktor "c" hineinziehen, wenn man sich nur innerhalb einer eng umschriebenen Glasfamilie bewegt.

Der Zusammenhang zwischen Abtragrate und Zahl der 3D-Winkelfreiheitsgrade ist, wie gesagt, empirisch gefunden worden, erscheint aber im Hinblick darauf, daß die Kinetik des Eindringens von OH⁻-Ionen in das Glas von der Entropie des Glases abhängt, plausibel. Der Faktor (0,9483333-Λ) wird nicht mit der Kinetik des Prozesses in Verbindung gebracht, sondern mit der Triebkraft der im Rahmen der Auflösung des Glases in der Lauge stattfindenden Säure-Base-Reaktion.

Da die erfindungsgemäßen Gläser eine Kombination der oben angegebenen konstituierenden Phasen aufweisen, ist es für die Berechnung der Zahl der 3D-Winkelfreiheitsgrade pro Atom zweckmäßig, diese zunächst für jede konstituierende Phase numerisch anzugeben. Es gilt:

**Tabelle 6**

| Konstituierende Phase | Stöchiometrie | Molmasse/ g | Zahl der Atome pro Baueinheit | Zahl der 3D-Winkelfreiheitsgrade pro Atom |
|---|---|---|---|---|
| Albit | $(Na_2O \cdot Al_2O_3 \cdot 6SiO_2)/8$ | 65,5558 | 3,2500 | 0,318898019 |
| Siliziumdioxid | $SiO_2$ | 60,08 | 3,0000 | 0 |
| Orthoklas | $(K_2O \cdot Al_2O_3 \cdot 6SiO_2)/8$ | 69,5829 | 3,2500 | 0,322595955 |
| Wollastonit | $(CaO \cdot SiO_2)/2$ | 58,08 | 2,5000 | 0,573505131 |
| Enstatit | $(MgO \cdot SiO_2)/2$ | 50,19 | 2,5000 | 0,541903867 |
| Parakeldyshit | $(Na_2O \cdot ZrO_2 \cdot 2SiO_2)/4$ | 76,3416 | 3,0000 | 0,5871628 |
| Narsarsukit | $(Na_2O \cdot TiO_2 \cdot 4SiO_2)/6$ | 63,7025 | 3,0000 | 0,379385407 |
| Dinatriumzinksilicat | $(Na_2O \cdot ZnO \cdot 3SiO_2)/5$ | 64,7222 | 2,8000 | 0,52778666 |
| Cordierit | $(2MgO \cdot 2Al_2O_3 \cdot 5SiO_2)/9$ | 64,9948 | 3,2222 | 0,427525472 |
| Strontiumsilicat | $(SrO \cdot SiO_2)/2$ | 81,437 | 2,5000 | 0,599379939 |
| Bariumsilicat | $(BaO \cdot SiO_2)/2$ | 106,7065 | 2,5000 | 0,60607952 |

Die Zahlenwerte sind nach dem in DE 10 2014 119 594 A1 angegebenen Verfahren berechnet worden, wobei hier die Zahl der Winkelfreiheitsgrade für alle Kationen berechnet worden ist und zwar so wie in DE 10 2014 119 594 A1 (aber dort nur für Bor und Aluminium); außerdem ist der Ionisationsgrad einer Kation-Sauerstoff-Verbindung nicht nach der Formel (8) aus der DE 10 2014 119 594 A1, sondern nach der Formel (3) aus Alberto Garcia, Marvon Cohen, First Principles Ionicity Scales, Phys. Rev. B 1993 berechnet worden. Dazu benötigt man noch eine Information über die Koordinationszahl des jeweiligen Kations, für die man nach Conradt, loc.cit., die Koordinationszahl in der jeweiligen konstituierenden Phase heranzieht (wenn ein Kation in mehreren Koordinationszahlen vorkommt, wird entsprechend den Anteilen in den verschiedenen Koordinationszahlen gemittelt). Die genannten Koordinationszahlen entnimmt man der Literatur, für Albit: American Mineralogist, Volume 61, pages 1213-1225, 1976, American Mineralogist, Volume 62, pages 921-931, 1977, American Mineralogist , Volume 64, pages 409-423 , 1979, American Mineralogist, Volume 81, pages 1344-1349, 1996, im Hinblick auf welche Quellen Si und Al als 4-fach und Na als 5-fach koordiniert angenommen werden; für $SiO_2$ wird die 4-fache Kordination von Silizium als allgemein bekannt angenommen; für Orthoklas: Canadian Mineralogist, Volume 17 pages 515-525, 1979, im Hinblick auf welche Quelle Aluminium als 4-fach koordiniert, Kalium als 9-fach koordiniert und Silizium als 4-fach koordiniert angenommen werden; für Wollastonit: Mineralogical Society of America, Special Paper 1, pages 293 - 302, 1963, im Hinblick auf welche Quelle Silizium als 4-fach und Kalzium als 6-fach koordiniert angenommen werden; für Enstatit: Canadian Mineralogist Vol. 37, pp 199-206, 1999, im Hinblick auf welche Quelle Silizium als 4-fach und Magnesium als 6-fach koordiniert angenommen werden; für Parakeldyshit: Acta Chemica Scandinavia, 1997, 51, 259-263, im Hinblick auf welche Quelle Silizium als 4-fach, Zirkon als 6-fach und Natrium als 8-fach koordiniert angenommen werden; für Narsarsukit: American Mineralogist 47 (1962), 539, im Hinblick auf welche Quelle Silizium als 4-fach, Titan als 6-fach und Natrium als 7-fach koordiniert angenommen werden; Dinatriumzinksilicat: Acta Cryst. (1977), B33, 1333-1337, im Hinblick auf welche Quelle Silizium und Zink als 4-fach und Natrium als 7-fach koordiniert angenommen werden; für Cordierit: American Mineralogist, Volume 77, pages 407-411, 1992, im Hinblick auf welche Quelle Silizium und Aluminium als 4-fach und Magnesium als 6-fach koordiniert angenommen werden; für Strontiumsilicat: Acta Cryst. C53, pages 534-536, 1997, im Hinblick auf welche Quelle Silizium als 4-fach und Strontium als 8-fach koordiniert angenommen werden; für Bariumsilicat: Wolfram Hempel: Struktureigenschaftsbeziehungen in Erdalkalisilikat basierenden Leuchtstoffen, Dissertation, Physik, Universität Augsburg, 2007, im Hinblick auf welche Quelle Silizium als 4-fach und Barium als 8-fach koordiniert angenommen werden.

Die Rechenvorschrift zur Bestimmung der 3D-Winkelfreiheitsgrade f pro Atom am fertigen Glas lautet damit:

$$f = \frac{\sum_{i=1}^{n} c_i \cdot z_i \cdot f_i}{\sum_{i=1}^{n} c_i \cdot z_i} \ , \tag{3}$$

wobei $c_i$ der molare Anteil der i-ten konstituierenden Phase in der betrachteten Glaszusammensetzung ist, $z_i$ die Zahl der Atome pro Baueinheit in der i-ten konstituierenden Phase (oder Zahl der Atome pro Mol in der i-ten konstituierenden Phase; dann in Einheiten von $N_A$, $N_A$ Avogadrozahl) und $f_i$ die Zahl der Winkelfreiheitsgrade pro Atom in der i-ten konstituierenden Phase. "n" ist die Zahl der konstituierenden Phasen.

Die Rechenvorschrift zur Bestimmung von $M/M_{SiO_2}$ lautet:

$$\frac{M}{M_{SiO_2}} = \frac{\sum_{i=1}^{n} c_i \cdot M_i}{M_{SiO_2} \cdot \sum_{i=1}^{n} c_i} \ , \tag{4}$$

wobei $c_i$ der molare Anteil der i-ten konstituierenden Phase in der betrachteten Glaszusammensetzung ist und $M_i$ die entsprechende Molmasse, "n" ist die Zahl der konstituierenden Phasen.

Die Rechenvorschrift zur Bestimmung von $N/N_{SiO_2}$ lautet:

$$\frac{N}{N_{SiO_2}} = \frac{\sum_{i=1}^{n} c_i \cdot z_i}{3 \cdot \sum_{i=1}^{n} c_i} \ , \tag{5}$$

wobei $c_i$ der molare Anteil der i-ten konstituierenden Phase in der betrachteten Glaszusammensetzung ist und $z_i$ die Zahl der Atome pro Baueinheit in der i-ten konstituierenden Phase (oder Zahl der Atome pro Mol in der i-ten konstituierenden Phase; dann in Einheiten von $N_A$, $N_A$ Avogadrozahl), "n" ist die Zahl der konstituierenden Phasen.

Der Faktor (0,9483333-A) wird durch folgende Überlegung mit der Triebkraft der Auflösung in Verbindung gebracht. Diese Triebkraft ist umso höher, je "saurer" das Glas ist, d.h. je höher der Anteil von Säureanhydriden und je geringer der Anteil von Baseanhydriden ist. Ein quantitatives Maß hierfür ist die optische Basizität, siehe C.P. Rodriguez, J.S. McCloy, M.J. Schweiger, J.V. Crum, A, Winschell, Optical Basicity and Nepheline Crystallization in High Alumina Glasses, Pacific Northwest National Laboratories, PNNL 20184, EMSP-RPT 003, prepared for the US Department of Energy under contract DE-AC05-76RL01830. Je niedriger die optische Basizität ist, desto höher ist die Triebkraft. Der Fall "Triebkraft gleich Null" liegt vor, wenn es sich um ein Material handelt, in dem die Säure-Base-Reaktion vollständig durchgelaufen ist. Den letztgenannten Fall nehmen wir insbesondere an, wenn das Glas die Stöchiometrie von Natriummetasilikat hat, also unter allen als Feststoff vorkommenden Natriumsilikaten demjenigen, das den höchsten Natriumanteil hat. (Natriumorthosilikat kommt nur in wäßriger Lösung vor.) Dessen optische Basizität ist nach der im folgenden beschriebenen Methode zur Berechnung derselben gerade 0,9483333, also der Wert, bei dem per constructionem der o.a. Faktor (0,9483333-A) gleich Null wird.

Wir berechnen die optische Basizität A nach Formel B.1 mit den Koeffizienten $\Lambda_{\chi av}$ (optische Basizität nach Li und Xue) gemäß Abschnitt B.1.6 und Tabelle B.1 aus C.P. Rodriguez, J.S. McCloy, M.J. Schweiger, J.V. Crum, A, Winschell, Optical Basicity and Nepheline Crystallization in High Alumina Glasses, Pacific Northwest National Laboratories, PNNL 20184, EMSP-RPT 003, prepared for the US Department of Energy under contract DE-AC05-76RL01830. Wo in der Tabelle für ein einfaches Oxid nur ein Koeffizient angegeben wird, wird dieser verwendet. Wo in der Tabelle für ein einfaches Oxid mehrere Koeffizienten angegeben werden, wird derjenige verwendet, der zu den Koordinationszahlen des jeweiligen Kations in den konstituierenden Phasen paßt. Für das oben beschriebene Grundsystem ist das nur bei Aluminiumoxid und Magnesiumoxid notwendig. Da Aluminium in allen konstituierenden Phasen des Grundsystems 4-fach koordiniert vorliegt und wir das entsprechend Conradt, loc. cit., auch annehmen, wird der in Tabelle B.1 bei Aluminiumoxid für die Koordinationszahl 4 angegebene Wert für den Koeffizienten $\Lambda_{ICP}$ verwendet. Da Magnesium in der einzigen Magnesium enthaltenden konstituierenden Phase des Grundsystems 6-fach koordiniert vorliegt, wird der in Tabelle B.1 bei Magnesiumoxid für die Koordinationszahl 6 angegebene Wert für den Koeffizienten $\Lambda_{\chi av}$ verwendet.

**Säurebeständigkeit**

Überraschenderweise lässt sich auch die Säurebeständigkeit mit Hilfe einer einfach zu berechnenden Kennzahl abschätzen. Ausgangspunkt der dahinterstehenden Überlegungen ist die Theorie von Anderson und Stuart über die Ionenbeweglichkeit in silicatischen Gläsern, siehe O.L. Anderson, D.A. Stuart, Calculation of Activation Energy of Ionic Conductivity in Silica Glasses by Classical Methods, Journal of the American Ceramic Society, Vol. 37, No. 12 (1954), 573 - 580. Danach hängt die Aktivierungsenergie der Bewegung eines Kations in einem silicatischen und damit oxidischen Glas zum einen von der zu überwindenden elektrostatischen Wechselwirkung mit den umgebenden Sauerstoffionen und zum anderen von dem zu überwindenden mechanischen Widerstand beim Wechsel von einer Masche des silicatischen Netzwerks in die nächste ab. Der erstgenannte Beitrag ist nach dem Coulombschen Gesetz proportional zur Ladungszahl des betrachteten Kations und umgekehrt proportional zur Dielektrizitätskonstanten, der zweitgenannte Beitrag ist proportional zum Schermodul und zum Quadrat des

Maßes, um das der Durchmesser des betrachteten Kations die Maschenweite des Netzwerkes überschreitet. Wegen des erstgenannten Beitrages sind i.a. nur einfach geladene Kationen beweglich und mehrfach geladene Kationen wie Aluminium ortsfest.

Im Kontakt zu einer hochkonzentrierten Säure, nach ISO 1776 bzw. DIN 12116 ist das 6N Salzsäure, ist das anders. In diesem Fall diffundieren Protonen bzw. Hydroniumionen in das Glas ein und bilden an der Oberfläche mit den im Säurebad zurückgebliebenen Choridionen eine elektrische Doppelschicht. Bei der Analyse des Eluates von nach ISO 1776 vorgenommenen Messungen hat sich gezeigt, daß diese elektrische Doppelschicht sich so weit ausbildet, daß das daher rührende elektrische Feld in der Lage ist, die elektrostatische Wechselwirkung des jeweiligen Kations mit den umgebenden Sauerstoffionen zu kompensieren, so daß auch Ionen hoher Ladungszahl beweglich werden. (Die Kraftwirkung des elektrischen Feldes der genannten Doppelschicht hängt genauso wie die elektrostatische Wechselwirkung des betrachteten Kations von dessen Ladungszahl ab; erstere kann von daher in der Lage sein, letztere zu kompensieren.)

Das kann so weit führen, daß unter gleichen Versuchsbedingungen (denen der ISO 1776) erheblich mehr Aluminiumionen ein alkalifreies Displayglas verlassen als Natriumionen ein Kalk-Natron-Glas. Auf der anderen Seite verlassen wiederum unter gleichen Versuchsbedingungen weniger Boratome ein Borosilicatglas als Aluminiumatome ein Aluminosilicatglas. Man kann das verstehen, wenn man die entsprechend der anderen Elektronegativitätswerte deutlich geringere Neigung von Bor oder auch Silizium berücksichtigt, mit Salzsäure zu reagieren, als das bei Aluminium oder Natrium der Fall ist. Die Reaktion Natriumoxid mit Salzsäure ist die einer starken Base bzw. eines starken Baseanhydrids mit einer starken Säure, Aluminium steht als Amphoter in der Mitte und bei Boroxid bzw. Siliziumoxid handelt es sich um die Anhydride schwacher Säuren.

Man kann die Neigung eines Kations, den Glasverbund zu verlassen, am Ionisationsgrad der entsprechenden Kation-Sauerstoff-Verbindung festmachen, die man nach der Formel (3) aus Alberto Garcia, Marvon Cohen, First Principles Ionicity Scales, Phys. Rev. B 1993 berechnet.

Dazu benötigt man noch eine Information über die Koordinationszahl des jeweiligen Kations, für die man nach Conradt, loc.cit., die Koordinationszahl in der jeweiligen konstituierenden Phase heranzieht (wenn ein Kation in mehreren Koordinationszahlen vorkommt, wird entsprechend den Anteilen in den verschiedenen Koordinationszahlen gemittelt). Die genannten Koordinationszahlen entnimmt man der Literatur, für Albit: American Mineralogist, Volume 61, pages 1213-1225, 1976, American Mineralogist, Volume 62, pages 921-931, 1977, American Mineralogist , Volume 64, pages 409-423 , 1979, American Mineralogist, Volume 81, pages 1344-1349, 1996, im Hinblick auf welche Quellen Si und Al als 4-fach und Na als 5-fach koordiniert angenommen werden; für $SiO_2$ wird die 4-fache Kordination von Silizium als allgemein bekannt angenommen; für Orthoklas: Canadian Mineralogist, Volume 17 pages 515-525, 1979, im Hinblick auf welche Quelle Aluminium als 4-fach koordiniert, Kalium als 9-fach koordiniert und Silizium als 4-fach koordiniert angenommen werden; für Wollastonit: Mineralogical Society of America, Special Paper 1, pages 293 - 302, 1963, im Hinblick auf welche Quelle Silizium als 4-fach und Kalzium als 6-fach koordiniert angenommen werden; für Enstatit: Canadian Mineralogist Vol. 37, pp 199-206, 1999, im Hinblick auf welche Quelle Silizium als 4-fach und Magnesium als 6-fach koordiniert angenommen werden; für Parakeldyshit: Acta Chemica Scandinavia, 1997, 51, 259-263, im Hinblick auf welche Quelle Silizium als 4-fach, Zirkon als 6-fach und Natrium als 8-fach koordiniert angenommen werden; für Narsarsukit: American Mineralogist 47 (1962), 539, im Hinblick auf welche Quelle Silizium als 4-fach, Titan als 6-fach und Natrium als 7-fach koordiniert angenommen werden; Dinatriumzinksilicat: Acta Cryst. (1977), B33, 1333-1337, im Hinblick auf welche Quelle Silizium und Zink als 4-fach und Natrium als 7-fach koordiniert angenommen werden; für Cordierit: American Mineralogist, Volume 77, pages 407-411, 1992, im Hinblick auf welche Quelle Silizium und Aluminium als 4-fach und Magnesium als 6-fach koordiniert angenommen werden; für Strontiumsilicat: Acta Cryst. C53, pages 534-536, 1997, im Hinblick auf welche Quelle Silizium als 4-fach und Strontium als 8-fach koordiniert angenommen werden; für Bariumsilicat: Wolfram Hempel: Struktureigenschaftsbeziehungen in Erdalkalisilikat basierenden Leuchtstoffen, Dissertation, Physik, Universität Augsburg, 2007, im Hinblick auf welche Quelle Silizium als 4-fach und Barium als 8-fach koordiniert angenommen werden.

Multipliziert man den Ionisationsgrad der Verbindung (Ionisationsgrad nach Pauling, nach der Formel (3) aus Alberto Garcia, Marvon Cohen, First Principles Ionicity Scales, Phys. Rev. B 1993 berechnet, s.o.) mit der Valenzzahl oder Wertigkeit des Kations, kommt man zu einer Kennzahl, die die dadurch, daß das Kation das Netzwerk verläßt, bewirkte Netzwerk-Zerstörung beschreibt. Die Wertigkeit des Kations gibt die Zahl der Hydroniumionen an, die aus Elektroneutralitätsgründen das Kation ersetzen müssen. Jedes Hydroniumion zerstört anderthalb Sauerstoffbrücken im Glas, was dann zu der beobachteten Gelbildung bei saurem Angriff führt, siehe z.B. T. Geisler, A. Janssen, D. Scheiter, T. Stephan, J. Berndt, A. Putnis, Aqueous corrosion of borosilicate glass under acidic conditions: A new corrosion mechanism, Journal of Non-Crystalline Solids 356 (2010) 1458-1465.

Multiplikation der jeweiligen Kennzahl mit der Zahl der Mole des betrachteten Kations in einem Mol Glas und Summation über alle Kationen führt zu einer Kennzahl des Maßes an Netzwerk-zerstörung, den ein saurer Angriff auf das Glas initial bewirkt. Insbesondere ermittelt man so Kennzahlen für die Gläser, die man aus jeweils einer konstituierenden Phase herstellt. Liegt die Zerlegung des Glases in konstituierende Phasen vor, so wird der in Molprozenten angegebene Anteil der jeweiligen konstituierenden Phase mit der letztgenannten Kennzahl Phase multipliziert, und es wird anschließend über alle konstituierenden Phasen summiert)

Bemerkenswerterweise findet sich, wie bereits oben dargelegt, ein klarer Zusammenhang zu den Säureklassen nach DIN 12116; im Kennzahlenbereich 190-210 steigt die Säureklasse rasch von 1 auf 4 an. Demzufolge ist eine möglichst kleine Kennzahl erstrebenswert.

Für die konstituierenden Phasen des erfindungsgemäßen Grundglassystems sind die Kennzahlen $k_i$ nachfolgend tabelliert, so daß die Kennzahl eines erfindungsgemäßen Glases nach der folgenden Formel berechnet werden kann:

$$k = \frac{\sum_{i=1}^{n} c_i \cdot k_i}{\sum_{i=1}^{n} c_i} \tag{6}$$

Dabei ist n die Zahl der konstituierenden Phasen, $c_i$ der jeweilige molare Anteil (Molprozent/100).

**Tabelle 7**

| | | |
|---|---|---|
| Albit | $(Na_2O \cdot Al_2O_3 \cdot 6SiO_2)/8$ | 208,797171 |
| Siliziumdioxid | $SiO_2$ | 178,9111743 |
| Orthoklas | $(K_2O \cdot Al_2O_3 \cdot 6SiO_2)/8$ | 209,3328332 |
| Wollastonit | $(CaO \cdot SiO_2)/2$ | 181,9311358 |
| Enstatit | $(MgO \cdot SiO_2)/2$ | 178,7332098 |
| Parakeldyshit | $(Na_2O \cdot ZrO_2 \cdot 2SiO_2)/4$ | 220,9573858 |
| Narsarsukit | $(Na_2O \cdot TiO_2 \cdot 4SiO_2)/6$ | 200,2637459 |
| Dinatriumzinksilicat | $(Na_2O \cdot ZnO \cdot 3SiO_2)/5$ | 176,7133128 |
| Cordierit | $(2MgO \cdot 2Al_2O_3 \cdot 5SiO_2)/9$ | 229,1163552 |
| Strontiumsilicat | $(SrO \cdot SiO_2)/2$ | 184,1495204 |
| Bariumsilicat | $(BaO \cdot SiO_2)/2$ | 184,535871 |

**Thermischer Ausdehnungskoeffizient**

Überraschenderweise lässt sich auch die Lage des thermischen Ausdehnungskoeffizienten im angestrebten Bereich mit Hilfe einer sehr einfachen Rechenvorschrift darstellen. Diese ergibt sich über die mittlere Bindungsstärke.

Aus der Literatur ist bekannt, dass der thermische Ausdehnungskoeffizient z.B. für Metalle umgekehrt proportional zur Bindungsenergie (oder zur "Tiefe der interatomaren Potentialtöpfe") ist, siehe z.B. H. Föll, Skript zur Vorlesung "Einführung in die Materialwissenschaft I", Christian Albrechts-Universität Kiel, S. 79 - 83.

In einem einfachen Bild oxidischer Gläser setzt man die Kationen in jeweils einen von den umgebenden Sauerstoffatomen gebildeten Potentialtopf und nimmt als dessen Tiefe die Summe der Bindungsstärken der verschiedenen Einfachbindungen zu den umgebenden Sauerstoffatomen an, konzentriert also die gesamte Wechselwirkungsenergie in Potentialtöpfe mit den Kationen im Zentrum und den Sauerstoffatomen in der Peripherie. Damit muss der umgekehrte Fall nicht mehr betrachtet werden; er wäre auch schwerer zu analysieren, da sich ein Sauerstoffatom zwischen mehreren verschiedenartigen Kationen befinden kann, was umgekehrt in rein oxidischen Gläsern nicht vorkommen kann. Diese Werte sind tabelliert, z.B. in DE 10 2014 119 594 A1:

**Tabelle 8**

| Kation | Potentialtopftiefe / (kJ/mol) |
|---|---|
| Si | 1864 |
| Ti | 1913 |
| Zr | 2204 |
| Al | 1537 |
| Zn | 728 |
| Mg | 999 |
| Ca | 1063 |
| Sr | 1005 |
| Ba | 976 |
| Na | 440,5 |
| K | 395 |

Die Werte für Ti, Zr, Sr, Ba und Zn stammen nicht aus DE 10 2014 119 594 A1, sind aber nach genau derselben, dort beschriebenen Methode mit den dort zitierten Quellen berechnet worden.

Aus der Zusammensetzung eines Glases aus den oben angegebenen konstituierenden Phasen, den in den jeweiligen Phasen enthaltenen Anzahlen verschiedener Kationen und der oben tabellierten Potentialtopftiefen pro Kation lässt sich eine mittlere Potentialtopftiefe errechnen:

$$\overline{E_{pot}} = \frac{\sum_{i=1}^{n} c_i \cdot \sum_{j=1}^{m} z_{i,j} \cdot E_{pot,j}}{\sum_{i=1}^{n} c_i \cdot \sum_{j=1}^{m} z_{i,j}}, \qquad (7)$$

Dabei ist m die Zahl der auftretenden Kationentypen, $E_{pot,j}$ die oben tabellierte Potentialtopftiefe für den j-ten Kationentyp und $z_{j,i}$ die Anzahl der Kationen des j-ten Typs in der i-ten konstituierenden Phase. Die Summen über j sind im Folgenden tabelliert:

**Tabelle 9**

| konstituierende Phase | Formel (auf ein einfaches Oxid normiert) | $\sum_{j=1}^{m} z_{i,j}$ | $\sum_{j=1}^{m} z_{i,j} \cdot E_{pot,j}$ / (kJ/mol) |
|---|---|---|---|
| Albit | $(Na_2O \cdot Al_2O_3 \cdot 6SiO_2)/8$ | 1,25 | 1892,375 |
| Siliziumdioxid | $SiO_2$ | 1 | 1864 |

(fortgesetzt)

| konstituierende Phase | Formel (auf ein einfaches Oxid normiert) | $\sum\limits_{j=1}^{m} z_{i,j}$ | $\sum_{j=1}^{m} z_{i,j} \cdot E_{pot,j}$ / (kJ/mol) |
|---|---|---|---|
| Orthoklas | $(K_2O \cdot Al_2O_3 \cdot 6SiO_2)/8$ | 1,25 | 1881 |
| Wollastonit | $(CaO \cdot SiO_2)/2$ | 1 | 1463,5 |
| Enstatit | $(MgO \cdot SiO_2)/2$ | 1 | 1431,5 |
| Parakeldyshit | $(Na_2O \cdot ZrO_2 \cdot 2SiO_2)/4$ | 1,25 | 1703 |
| Narsarsukit | $(Na_2O \cdot TiO_2 \cdot 4SiO_2)/6$ | 1,166666667 | 1708,33 |
| Dinatriumzinksilicat | $(Na_2O \cdot ZnO \cdot 3SiO_2)/5$ | 1,2 | 1440,2 |
| Cordierit | $(2MgO \cdot 2Al_2O_3 \cdot 5SiO_2)/9$ | 1,222222222 | 1940,666667 |
| Strontiumsilicat | $(SrO \cdot SiO_2)/2$ | 1 | 1434,5 |
| Bariumsilicat | $(BaO \cdot SiO_2)/2$ | 1 | 1420 |

Diese mittlere Bindungsstärke hängt, wie z.B. auch bei Metallen, siehe H. Föll, loc. cit., umgekehrt proportional mit dem thermischen Ausdehnungskoeffizienten zusammen. Die Auswertung einer Reihe einschlägiger Gläser führt zu folgender Formel:

$$CTE = \left( \frac{50082,42827\left(\frac{kJ}{Mol}\right)}{\overline{E_{pot}}} - -26,14910156 \right) ppm/K, \qquad (8)$$

Da die Bindungsstärke umgekehrt proportional zum Schmelzpunkt ist, gilt eine umgekehrte Proportionalität auch zwischen Schmelzpunkt und Ausdehnungskoeffizient, siehe wiederum H. Föll, loc. cit. Da der Schmelzpunkt bei nicht-stöchiometrischen Gläsern nicht genau definiert ist, gilt zwischen der im Allgemeinen als Schmelzpunkt bezeichneten Temperatur, bei der die Viskosität 100 dPas beträgt, und dem Ausdehnungskoeffizienten nur ein tendenzieller Zusammenhang. Über diesen ist aber sichergestellt, dass die erfindungsgemäßen Gläser schmelzbar sind.

Während die Forderung nach einer guten Schmelzbarkeit einen möglichst großen thermischen Ausdehnungskoeffizienten nahelegt, legt umgekehrt die Forderung nach möglichst geringen thermischen Spannungen bei einer eventuellen thermischen Nachprozessierung einen möglichst geringen thermischen Ausdehnungskoeffizienten nahe. Die Kombination beider Forderungen führt auf den hier bevorzugten mittleren Bereich für den Ausdehnungskoeffizienten bzw. die mittlere Potentialtopftiefe.

**Chemische Vorspannbarkeit**

Um eine optimale Austauschbarkeit zu gewährleisten, beträgt der Natriumoxidgehalt der erfindungsgemäßen Gläser bevorzugt 3 Mol% bis 12 Mol%. Gemeint ist der molare Anteil an diesem Oxid nach Umrechnung der Zusammensetzung in die entsprechende Oxidzusammensetzung.

Des weiteren wird zur Sicherstellung einer hohen Austauschbarkeit wegen des Zusammenhanges zum thermischen Ausdehnungskoeffizienten ein hoher Wert desselben angestrebt, siehe Journal of Non-Crystalline Solids 455 (2017) 70-74. Wie aus den o.a. Darlegungen zum thermischen Ausdehnungskoeffizienten abzulesen ist, wird dieser insbesondere durch Zugabe von Alkali- oder Erdalkaliionen erhöht. Dies führt, wie wiederum den o.a. Darlegungen zur Alkalibeständigkeit abzulesen ist, wegen des Zusammenhangs mit der Triebkraft bei der Auflösung im alkalischen Medium auch zu einer hohen Alkaliresistenz. Allerdings führt dies auch zu einer Erhöhung des nach den o.a. Regeln bestimmten pH-Wertes, was wiederum die hydrolytische Beständigkeit senkt.

Erfindungsgemäß bevorzugt sind daher Gläser, bei denen der Quotient aus dem mit 1000 multiplizierten thermischen Ausdehnungskoeffizienten (in ppm/K) einerseits und dem Produkt aus dem pH-Wert und der berechneten Abtragrate im alkalischen Milieu (in mg/(dm$^2$3h)) entsprechend ISO 695 andererseits mindestens 7,75, bevorzugt mindestens 8, bevorzugt mindestens 8,25, besonders bevorzugt mindestens 8,5, ganz besonders bevorzugt mindestens 8,75, noch weiter bevorzugt mindestens 9, am meisten bevorzugt mindestens 9,25 beträgt. Gemeint sind jeweils die berechneten Werte für den thermischen Ausdehnungskoeffizienten, den pH-Wert und die Abtragrate nach ISO 695.

**Auswahl geeigneter konstituierender Phasen**

Albit

Ein in dem Glas dieser Erfindung als konstituierende Phase vertretenes Grundglas ist Albit-Glas. Vom idealen Albit ($NaAlSi_3O_8$) ist bekannt, dass er aufgrund seines Aufbaus aus einem Gerüst aus $SiO_4$- und $AlO_4$-Tetraedern mit im Gerüst beweglichen Natriumionen eine hohe Natrium-Diffusivität aufweist, siehe Geochimica et Cosmochimica Acta, 1963, Vol. 27, Seiten 107-120. Daher trägt ein Anteil an Albit-Glas zu einer hohen Natrium-Mobilität bei, die sich förderlich auf den Ionenaustausch und damit die chemische Vorspannbarkeit der Gläser auswirkt. Gegenüber dem eine noch höhere Natriumdiffusivität aufweisenden Nephelin (künstliche Variante ohne Kalium: $NaAlSiO_4$) hat der Albit den Vorteil eines bedeutend niedrigeren Schmelzpunktes (1100-1120°C), was die Schmelzbarkeit des Glases verbessert.

Eine zu geringe Menge an Albit beeinträchtigt die Ionenaustauschbarkeit bzw. chemische Vorspannbarkeit im Hinblick auf den Austausch von Natrium gegen Kalium. Reines Albit-Glas hätte wohl eine optimale chemische Vorspannbarkeit, wäre allerdings im Hinblick auf die geforderte chemische Beständigkeit, speziell die Säurebeständigkeit, nicht zielführend. Unter einem Mol Albit wird erfindungsgemäß ein Mol ($Na_2O \cdot Al_2O_3 \cdot 6SiO_2$)/8 verstanden.

Der Anteil an Albit in dem erfindungsgemäßen Glas ist wenigstens 20 Mol% und höchstens 60 Mol%. Bevorzugte Anteile in dem erfindungsgemäßen Glas sind mindestens 25 Mol%, mindestens 30 Mol%, mindestens 35 Mol% oder besonders bevorzugt mindestens 40 Mol%. Vorzugsweise beträgt der Gehalt an Albit maximal 56 Mol% oder bis zu 50 Mol%.

Alle Komponenten nehmen als Hydroxide einen Einfluß auf den pH-Wert bei der Messung der hydrolytischen Beständigkeit. Aluminiumhydroxid ist zwar in neutraler wäßriger Lösung und schwachen Laugen schwer löslich; die Löslichkeitsgrenze liegt aber deutlich über den bei den Messungen der hydrolytischen Beständigkeit auftretenden Konzentrationen.

Orthoklas

Zur Unterdrückung einer möglichen Entmischungsneigung wird als zweite Phase das Kalium-Analogon des Albit beigegeben, der Orthoklas. Unter einem Mol Orthoklas wird ein Mol ($K_2O \cdot Al_2O_3 \cdot 6SiO_2$)/8 verstanden.

Der Anteil an Orthoklas in dem erfindungsgemäßen Glas beträgt von 0 Mol% bis höchstens 20 Mol%. Bevorzugte Anteile in dem erfindungsgemäßen Glas sind höchstens 15 Mol%, höchstens 10 Mol% oder bevorzugt höchstens 5 Mol%. In bestimmten Ausführungsformen beträgt der Anteil an Orthoklas mindestens 1 Mol%, bevorzugt mindestens 2 Mol%. In anderen bevorzugten Ausführungsformen ist das Glas frei von Orthoklas. Insbesondere übersteigt der Gehalt an Orthoklas in einigen bevorzugten Ausführungsformen den Gehalt an Enstatit nicht.

Alle Komponenten nehmen als Hydroxyde einen Einfluß auf den pH-Wert bei der Messung der hydrolytischen Beständigkeit.

Parakeldvshit

Als weitere Natrium-leitende Phase wird Parakeldyshit hinzugegeben. Als Kristall ist Parakeldyshit ein dreidimensionales Netzwerk aus Siliziumtetraedern und Zirkoniumoktaedern, mit 8-fach koordinierten Natriumatomen in den Hohlräumen dazwischen. Diese zeolitartige, lockere (sehr hohe Koordinationszahl für Natrium) Struktur unterstützt die Ionenbeweglichkeit. Es gibt ein strukturell verwandtes Kalium-Analogon, den Khibinskit, so daß auch ein Austausch Natrium gegen Kalium möglich ist. Siehe G. Raabe, M.H. Mladeck, Parakeldyshit from Norway, Canadian Mineralogist Vol. 15, pp. tO2-IO7 (1977).

Dies ist von Vorteil, um eine schnelle Bewegung der Ionen Natrium und Kalium beim Ionenaustausch zu ermöglichen. Der Spannungsaufbau beim Austausch Natrium gegen Kalium ist wegen des lockeren Netzwerkes eher gering; es ist aber für die oben genannten Anwendungen wichtiger, eine große Austauschtiefe als eine hohe Vorspannung zu erreichen (die Vorspannung erfüllt nur dann ihren Zweck, wenn die Austauschtiefe beim Ionenaustausch größer als die Tiefe möglicher Oberflächenbeschädigungen wie Kratzern ist).

Das enthaltene Zirkonium hat eine Bedeutung für die Messung der hydrolytischen Beständigkeit. Zirkoniumhydroxid fällt zwar in wäßriger Lösung und schwachen Laugen aus, aber erst ab einer gewissen Konzentration, die bei hydrolytischen Beständigkeitsmessungen nicht erreicht wird. Wegen seiner pks-Werte hat es bei dieser einen pH-senkenden Einfluß.

Unter einem Mol Parakeldyshit wird ein Mol ($Na_2O \cdot ZrO_2 \cdot 2SiO_2$)/4 verstanden. Der Anteil an Parakeldyshit in dem erfindungsgemäßen Glas beträgt 0 bis 20 Mol%; die Obergrenze ist im Hinblick auf die mit Zirkonium verbundene Entglasungsproblematik gewählt. Bevorzugt beträgt der Anteil an Parakeldyshit im erfindungsgemäßen Glas höchstens 15 Mol%, höchstens 10 Mol% oder besonders bevorzugt höchstens 5 Mol%. In bestimmten Ausführungsformen beträgt der Anteil an Parakeldyshit mindestens 1 Mol%, bevorzugt mindestens 2 Mol%. In anderen bevorzugten Ausführungsformen ist das Glas frei von Parakeldyshit. Insbesondere übersteigt der Gehalt an Parakeldyshit in einigen bevorzugten Ausführungsformen den Gehalt an Enstatit nicht.

Narsarsukit

Als Kristall ist Narsarsukit ein dreidimensionales Netzwerk aus Siliziumtetraedern und Titanoktaedern, mit 7-fach koordinierten Natriumatomen in den Hohlräumen dazwischen. Diese Struktur unterstützt die Ionenbeweglichkeit. Siehe D.R.Peacor, M.J. Buerger, The Determination and Refinement of the Structure of Narsarsukite, Na2TiOSi4O10, American Mineralogist Vol. 67, 5-6 pp. 539 - 556 (1962). Es gibt ein Kalium-Analogon, siehe K. Abraham, O. W. Flörke, and K. Krumbholz, Hydrothermaldarstellung und Kristalldaten von K2TiSi3O9, K2TiSi4O11, K2TiSi6O15, K2ZrSi3O9 und K2O·4SiO2·H2O, Fortschr. Mineral 49 (1971), 5-7, so daß auch ein Austausch Natrium gegen Kalium möglich ist.

Das enthaltene Titan fällt in wäßriger Lösung und Laugen als Titandioxid aus und nimmt keinen Einfluß auf die Messung der hydrolytischen Beständigkeit.

Unter einem Mol Nasarsukit wird ein Mol ($Na_2O·TiO_2·4SiO_2$)/6 verstanden. Der Gehalt an Nasarsukit in dem erfindungsgemäßen Glas beträgt 0 bis 20 Mol%. Bevorzugte Anteile in dem erfindungsgemäßen Glas sind höchstens 10 Mol%, höchstens 5 Mol%, höchstens 3 Mol%, höchstens 2 Mol% oder höchstens 1 Mol%. In bestimmten Ausführungsformen kann das Glas frei sein von Narsarsukit, insbesondere kann der Gehalt an Narsarsukit geringer sein als der Gehalt an Wollastonit und/oder Enstatit.

Dinatriumzinksilicat

Als Kristall ist Dinatriumzinksilicat ein dreidimensionales Netzwerk aus Silizium- und Zinktetraedern, mit mindestens 7-fach koordinierten Natriumatomen in den Hohlräumen dazwischen. Diese Struktur unterstützt die Ionenbeweglichkeit. Siehe K.-F. Hesse, F. Liebau, H. Böhm, Disodiumzincosilicate, Na2ZnSi3O3, Acta. Cryst. B33 (1977), 1333-1337. Es gibt ein Kalium-Analogon, siehe W.A. Dollase, C.R. Ross II, Crystal Structure, of K2ZnSi3O8, Zeitschrift für Kristallographie 206 (1993), 25-32, so daß ein Austausch Natrium gegen Kalium ohne weiteres möglich ist, allerdings lassen die großen Hohlräume kein großes "Aufquellen" der Struktur bei Ionenaustausch erwarten, so daß der Anteil an Dinatriumzinksilikat begrenzt sein muß, wenn eine hohe Druckvorspannung an der Oberfläche angestrebt wird.

Das enthaltene Zink nimmt als amphoteres Zinkhydoxid kaum keinen Einfluß auf den pH-Wert bei der Messung der hydrolytischen Beständigkeit. Es ist in neutraler wäßriger Lösung schwer löslich; die Löslichkeitsgrenze liegt aber deutlich über den bei den Messungen der hydrolytischen Beständigkeit auftretenden Konzentrationen.

Unter einem Mol Dinatriumzinksilicat wird ein Mol ($Na_2O·ZnO·3SiO_2$)/5 verstanden. Der Gehalt an Dinatriumzinksilicat in dem erfindungsgemäßen Glas beträgt 0% bis 40%.

Bevorzugte Anteile in dem erfindungsgemäßen Glas sind mindestens 0,1 Mol%, mindestens 1 Mol%, mindestens 2 Mol%, mindestens 5 Mol% oder besonders bevorzugt mindestens 10 Mol%. In bevorzugten Ausführungsformen beträgt der Gehalt maximal 19 Mol%, maximal 18 Mol%, maximal 17 Mol% oder maximal 15 Mol%.

Cordierit

Cordierit ist zwar an und für sich alkalifrei, weist aber trotzdem wegen seiner Struktur und geringen Packungsdichte eine hohe Natriumbeweglichkeit auf, was von Degradationserscheinungen von Cordieritglaskeramiken her bekannt ist, siehe Ceramics International 22 (1996) 73-77.

Gerade wegen der Alkalifreiheit trägt Cordierit - im Gegensatz zu den bisherigen Phasen - nicht zu einem großen Ausdehnungskoeffizienten bei, der wegen der damit verbundenen verminderten thermischen Belastbarkeit nicht erwünscht ist.

Wegen dieser vorteilhaften Eigenschaften wird auch Cordierit in die konstituierenden Phasen aufgenommen, wobei unter einem Mol Cordierit ein Mol ($2MgO·2Al_2O_3·5SiO_2$)/9 verstanden wird. Der Gehalt an Cordierit in dem erfindungsgemäßen Glas beträgt 0% bis 20%.

Bevorzugte Anteile in dem erfindungsgemäßen Glas sind höchstens 15 Mol% oder bevorzugt höchstens 10 Mol%. In bestimmten Ausführungsformen beträgt der Anteil an Cordierit mindestens 1 Mol%, bevorzugt mindestens 2 Mol%. In anderen bevorzugten Ausführungsformen ist das Glas frei von Cordierit. Insbesondere übersteigt der Gehalt an Cordierit in einigen bevorzugten Ausführungsformen den Gehalt an Dinatriumzinksilikat nicht.

Enstatit, Wollastonit, Strontiumsilicat, Bariumsilicat

Das im Cordierit enthaltene Aluminium hat zwar den Vorteil, sich fördernd auf die Natriumbeweglichkeit auszuwirken, gleichzeitig aber wiederum den Nachteil, die Säureempfindlichkeit zu erhöhen. Deshalb werden auch Phasen beigemischt, deren Beitrag den Ausdehnungskoeffizienten zu mittleren Werten verschiebt, die aber kein Aluminium enthalten. Dafür werden Erdalkalisilicate ausgewählt, nämlich Enstatit, wobei unter einem Mol Enstatit ein Mol $(MgO \cdot SiO_2)/2$ verstanden wird, Wollastonit, wobei unter einem Mol Wollastonit ein Mol $(CaO \cdot SiO_2)/2$ verstanden wird, Strontiumsilicat, wobei unter einem Mol Strontiumsilicat ein Mol $(SrO \cdot SiO_2)/2$ verstanden wird, und Bariumsilicat, wobei unter einem Mol Bariumsilicat ein Mol $(BaO \cdot SiO_2)/2$ verstanden wird.

Die Anteile in dem erfindungsgemäßen Glas sind 0% bis 20% für Enstatit sowie 0% bis 10% für Strontiumsilicat, Bariumsilicat und Wollastonit.

Bevorzugte Anteile an Enstatit sind 1 bis 15 Mol%, 2 bis 10 Mol% oder besonders bevorzugt 4 bis 8 Mol%. Bevorzugt ist der Anteil an Enstatit mindestens genauso hoch ist wie der Anteil an Wollastonit und/oder mindestens genauso hoch wie der Anteil an Parakeldyshit.

Bevorzugte Anteile an Wollastonit sind höchstens 8 Mol%, höchstens 6 Mol%, höchstens 5 Mol% oder besonders bevorzugt höchstens 4 Mol%. In bestimmten Ausführungsformen beträgt der Anteil an Wollastonit mindestens 1 Mol%, bevorzugt mindestens 2 Mol%. In anderen Ausführungsformen ist das Glas frei von Wollastonit. Insbesondere übersteigt der Gehalt an Wollastonit in einigen bevorzugten Ausführungsformen den Gehalt an Enstatit nicht. Bevorzugt liegt die Summe der Anteile an Wollastonit und Cordierit in einem Bereich von 1 bis 20 Mol%, 2 bis 15 Mol% oder besonders bevorzugt 3 bis 12 Mol%. Bevorzugt liegt das Verhältnis des Anteils an Albit zur Summe der Anteile an Wollastonit und Cordierit in einem Bereich von 1 bis 30, 2 bis 20 oder besonders bevorzugt 3 bis 16.

Bevorzugte Anteile an Strontiumsilicat sind höchstens 8 Mol%, höchstens 5 Mol% oder bevorzugt höchstens 2 Mol%. In bestimmten Ausführungsformen beträgt der Anteil an Strontiumsilicat mindestens 1 Mol%, bevorzugt mindestens 1,5 Mol%. In anderen Ausführungsformen ist das Glas frei von Strontiumsilicat. Insbesondere übersteigt der Gehalt an Strontiumsilicat in einigen bevorzugten Ausführungsformen den Gehalt an Wollastonit nicht.

Bevorzugte Anteile an Bariumsilicat sind höchstens 5 Mol%, höchstens 2 Mol% oder besonders bevorzugt höchstens 1 Mol%. In bestimmten Ausführungsformen kann das Glas frei sein von Bariumsilicat, insbesondere kann der Gehalt an Bariumsilicat geringer sein als der Gehalt an Wollastonit und/oder Enstatit.

Besonders bevorzugt ist das Glas frei von Narsarsukit und/oder Bariumsilicat.

Siliziumdioxid

Reines Siliziumdioxid wird im Hinblick auf die Absenkung des Ausdehnungskoeffizienten und die vorteilhafte Wirkung bezüglich aller drei Spielarten der chemischen Beständigkeit beigegeben. Die Anteile in dem erfindungsgemäßen Glas sind 0% bis 40%.

Bevorzugte Anteile an Siliziumdioxid sind 10 bis 35 Mol% oder besonders bevorzugt von 15 bis 30 Mol%.

Bevorzugt beträgt die Summe der Anteile an Albit, Siliziumdioxid und Dinatriumzinksilicat mindestens 50 Mol%, mindestens 60 Mol% oder mindestens 70 Mol%.

Bevorzugt liegt das Verhältnis des Anteils an Dinatriumzinksilicat zum Anteil an Siliziumdioxid in einem Bereich von 0,1 bis 2,0 oder von 0,2 bis 1,5 oder bevorzugt von 0,3 bis 1,0.

Weitere Komponenten

Zusätzlich zu den bereits genannten Komponenten kann das Glas weitere Bestandteile enthalten, die hierin als "Rest" bezeichnet werden. Der Anteil des Restes an dem erfindungsgemäßen Glas beträgt höchstens 1 Mol-%, um die durch sorgsame Auswahl geeigneter Grundgläser eingestellten Glaseigenschaften nicht zu stören. Insbesondere ist der Gehalt an einzelnen Oxiden, insbesondere Lithiumdioxid, auf <1Mol% beschränkt. In besonders bevorzugten Ausführungsformen beträgt der Anteil an Rest in dem Glas höchstens 0,5 Mol%. Der Rest enthält insbesondere Oxide, die nicht in den hierin genannten Grundgläsern enthalten sind. Somit enthält der Rest insbesondere kein $SiO_2$, $Al_2O_3$, $ZrO_2$, $TiO_2$, $ZnO$, $MgO$, $CaO$, $SrO$, $BaO$, $Na_2O$ oder $K_2O$. Wenn es in dieser Beschreibung heißt, die Gläser seien frei von einer Komponente bzw. einer konstituierenden Phase oder enthalten eine gewisse Komponente bzw. konstituierende Phase nicht, so ist damit gemeint, dass diese Komponente bzw. konstituierende Phase allenfalls als Verunreinigung in den Gläsern vorliegen darf. Das bedeutet, dass sie nicht in wesentlichen Mengen zugesetzt wird. Nicht wesentliche Mengen sind erfindungsgemäß Mengen von weniger als 300 ppm (molar), bevorzugt weniger als 100 ppm (molar), besonders bevorzugt weniger als 50 ppm (molar) und am meisten bevorzugt weniger als 10 ppm (molar). Die Gläser dieser Erfindung sind insbesondere frei von Blei, Arsen, Antimon, Wismut und/oder Cadmium.

In den Formeln kommt der Rest nicht vor. Bis auf die Formeln für den pH-Wert sind alle Formeln so gestaltet, als ob der aus den konstituierenden Phasen bestehende Anteil 100% ausmachen würde. In den Formeln für den pH-Wert wird der Rest vernachlässigt.

Nach Umrechnung in die Oxidzusammensetzung beträgt der Anteil an $B_2O_3$ in den Gläsern der Erfindung Weniger als 1 Mol%, weiter bevorzugt weniger als 0,5 Mol%. Besonders bevorzugt sind die Gläser frei von $B_2O_3$.

Nach Umrechnung in die Oxidzusammensetzung beträgt der Anteil an $P_2O_5$ in den Gläsern der Erfindung weniger als 1 Mol%, weiter bevorzugt weniger als 0,5 Mol%. Besonders bevorzugt sind die Gläser frei von $P_2O_5$.

Nach Umrechnung in die Oxidzusammensetzung beträgt das Verhältnis des molaren Anteils an $Al_2O_3$ zum molaren Anteil an $K_2O$ in den Gläsern der Erfindung bevorzugt mindestens 1, weiter bevorzugt mindestens 1,1.

Nach Umrechnung in die Oxidzusammensetzung beträgt der Anteil an $Li_2O$ in den Gläsern der Erfindung höchstens 1 Mol%, weiter bevorzugt höchstens 0,5 Mol%. Besonders bevorzugt sind die Gläser frei von $Li_2O$.

Nach Umrechnung in die Oxidzusammensetzung beträgt der Anteil an Fluor in den Gläsern der Erfindung höchstens 1 Mol%, weiter bevorzugt höchstens 0,5 Mol%. Besonders bevorzugt sind die Gläser frei von Fluor.

### Bevorzugte Glaszusammensetzungen

Die bevorzugten Ausführungsformen ergeben sich im Rahmen des o.a. Grundsystems aus der Vorgabe einer gewünschten thermischen Ausdehnung und einer gewünschten Natriumkonzentration.

Die Lösung der erfindungsgemäßen Aufgabe besteht dann darin, unter Einhaltung der Vorgaben eine Kombination einer geringen Abtragrate im alkalischen Milieu (vgl. oben ISO 695), eines geringen pH-Wertes und einer hohen Säurebeständigkeit zu erreichen. Dies geschieht mit Hilfe der o.a. Formeln (1) - (6). Wenn in dieser Beschreibung auf die Kennzahl für die Säurebeständigkeit, die Abtragrate nach ISO 695, den CTE und/oder den pH-Wert Bezug genommen wird, so ist damit stets der berechnete Wert gemeint, falls nichts anderes angegeben ist.

Eine bevorzugte Zusammensetzung ist durch folgende das Glas konstituierende Phasen gekennzeichnet:

**Tabelle 10**

| konstituierende Phase | Min (Mol%) | Max (Mol%) |
|---|---|---|
| Albit | 30 | 60 |
| Siliziumdioxid | 10 | 30 |
| Orthoklas | 0 | 5 |
| Wollastonit | 0 | 5 |
| Enstatit | 1 | 10 |
| Parakeldyshit | 0 | 5 |
| Narsarsukit | 0 | 1 |
| Dinatriumzinksilicat | 5 | 20 |
| Cordierit | 0 | 10 |
| Strontiumsilicat | 0 | 5 |

### Herstellung

Erfindungsgemäß ist auch ein Verfahren zur Herstellung eines Glases dieser Erfindung, mit den Schritten:

- Schmelzen der Glasrohstoffe,

- optional Formen eines Glasartikels, insbesondere eines Glasrohres, aus der Glasschmelze

- Abkühlen des Glases.

Das Formen des Glases kann ein Ziehverfahren umfassen, insbesondere ein Rohrzugverfahren oder ein Ziehverfahren für Flachglas. Das Abkühlen kann ein aktives Abkühlen unter Einsatz eines Kühlmittels, z.B. eines Kühlfluids, oder durch passives Abkühlen-lassen durchgeführt werden.

### Verwendungen und Glasartikel

Erfindungsgemäß sind neben dem Glas auch aus dem Glas geformte Glasartikel wie Glasrohre und Behälter (wie Flaschen, Ampullen, Karpulen, Spritzen) sowie die Verwendung des Glases für das chemische Vorspannen und die Verwendung für die Herstellung von Glasrohren und pharmazeutischen Behältnissen, insbesondere Primärpackmitteln. Bevorzugt sind die Glasartikel zur Verwendung als Packmittel für pharmazeutische Erzeugnisse, insbesondere als Behälter für Flüssigkeiten, bestimmt. In Rahmen dieser Verwendungen sind die hydrolytische und die Laugenbeständigkeit von besonderem Interesse.

**Vergleichsbeispiele aus dem Stand der Technik**

**Vergleichsbeispiele 1-31**

Die Vergleichsbeispiele 1-31 sind die dort als Glas A- EE bezeichneten Beispiele der US 9,718,721 B2. US 9,718,721 B2 lehrt Erdalkali-Aluminiumsilicat-Gläser mit verbesserter chemischer und mechanischer Beständigkeit. Davon enthalten G, I, J, Q - V, X, DD, EE $\geq 1$ % $Li_2O$ und sind nicht erfindungsgemäß. Die anderen Beispiele haben die Zusammensetzung:

**Tabelle 11**

| # | Oxid | A Mol% | B | C | D | F | H | K | L | M | N | O | P | W | AA | BB | CC |
|---|------|--------|---|---|---|---|---|---|---|---|---|---|---|---|----|----|----|
| 1. | $SiO_2$ | 68,3 | 68,6 | 67,7 | 70,8 | 71,7 | 71,7 | 72,3 | 72,3 | 72,3 | 72,3 | 71,7 | 72,2 | 72,4 | 72,4 | 72,4 | 72,5 |
| 2. | $TiO_2$ | 0 | 0 | 0 | 0 | 0 | 0 | 0 | 0 | 0 | 0 | 0 | 0 | 0 | 0 | 0 | 0 |
| 3. | $ZrO_2$ | 1,5 | 1,5 | 1,5 | 1,5 | 0 | 0 | 0 | 0 | 0 | 0 | 0 | 0 | 0 | 0 | 0 | 0 |
| 4. | $Al_2O_3$ | 9 | 9,3 | 10,2 | 7,1 | 7,4 | 7,4 | 7,1 | 7,1 | 7,1 | 7,4 | 7,4 | 7,4 | 7,4 | 7,4 | 7,4 | 7,6 |
| 5. | ZnO | 0 | 0 | 0 | 0 | 0 | 0 | 0 | 0 | 0 | 0 | 0 | 0 | 0 | 0 | 0 | 1,5 |
| 6. | MgO | 5,1 | 5,1 | 5,1 | 5,1 | 5,1 | 5,1 | 5,1 | 5,1 | 5,1 | 6,8 | 6,5 | 5,1 | 2,6 | 2,6 | 2,6 | 2,6 |
| 7. | CaO | 5,3 | 5,3 | 5,3 | 5,3 | 5,3 | 4,3 | 5,3 | 5,3 | 5,3 | 4,3 | 5,5 | 4,3 | 5,3 | 4,3 | 3,3 | 2,5 |
| 8. | SrO | 3,8 | 3,8 | 3,8 | 3,8 | 3,8 | 0,5 | 3,8 | 3,8 | 3,8 | 0,5 | 1 | 0,5 | 3,8 | 4,8 | 5,8 | 3,8 |
| 9. | BaO | 1,4 | 1,4 | 1,4 | 1,4 | 1,4 | 0,5 | 1,4 | 1,4 | 0 | 0,5 | 0 | 0 | 0 | 0 | 0 | 0 |
| 10. | $Na_2O$ | 2,5 | 2,5 | 2,5 | 2,5 | 2,5 | 10 | 2,5 | 4,5 | 5,9 | 7,7 | 7,4 | 10 | 8 | 8 | 8 | 9 |
| 11. | $K_2O$ | 2,5 | 2,5 | 2,5 | 2,5 | 2,5 | 0,5 | 2,5 | 0,5 | 0,5 | 0,5 | 0,5 | 0,5 | 0,5 | 0,5 | 0,5 | 0,5 |
| 12. | Rest | 0,6 ($B_2O_3$) | 0 | 0 | 0 | 0,3 | 0 | 0 | 0 | 0 | 0 | 0 | 0 | 0 | 0 | 0 | 0 |

Die Umrechnung in konstituierende Phasen ergibt, daß keine der Zusammensetzungen A-C, H, N - P, W, AA - CC zum erfindungsgemäßen Grundsystem gehört. Die Umrechnung in konstituierende Phasen ergibt weiter, daß die in US 9,718,721 B2 mit D, F, K - M bezeichneten Beispiele zum erfindungsgemäßen Grundsystem gehören, allerdings nicht in den erfindungsgemä-ßen Zusammensetzungsbereich fallen, da der Anteil an Wollastonit zu hoch ist. E ist identisch zu D.

**Tabelle 12**

|  | D | F | K | L | M |
|---|---|---|---|---|---|
| **konstituierende Phase** | **Mol%** |  |  |  |  |
| Albit | 8,00 | 20,00 | 20,00 | 36,00 | 47,20 |
| Siliziumdioxid | 25,80 | 22,50 | 23,55 | 23,55 | 18,65 |
| Orthoklas | 20,00 | 20,00 | 20,00 | 4,00 | 4,00 |
| Wollastonit | 10,60 | 10,60 | 10,60 | 10,60 | 10,60 |
| Enstatit | 3,00 | 5,40 | 6,00 | 6,00 | 8,80 |
| Parakeldyshit | 6,00 | 0,00 | 0,00 | 0,00 | 0,00 |
| Narsarsukit | 0,00 | 0,00 | 0,00 | 0,00 | 0,00 |
| Dinatriumzinksilicat | 0,00 | 0,00 | 0,00 | 0,00 | 0,00 |
| Cordierit | 16,20 | 10,80 | 9,45 | 9,45 | 3,15 |
| Strontiumsilicat | 7,60 | 7,60 | 7,60 | 7,60 | 7,60 |
| Bariumsilicat | 2,80 | 2,80 | 2,80 | 2,80 | 0,00 |

Die berechneten Eigenschaften sind:

**Tabelle 13**

| Lfd. Nr. | ISO 695: berechnete Abtragrate/mg/( dm$^2$3h) | Kennzahl für Säurebeständigkeit: | Berechneter CTE | pH |
|---|---|---|---|---|
| D | 96,34 | 198,90 | 6,26 | 9,10 |
| F | 93,06 | 197,30 | 6,39 | 9,11 |
| K | 92,15 | 196,56 | 6,35 | 9,11 |
| L | 88,28 | 196,49 | 6,32 | 9,11 |
| M | 87,24 | 196,51 | 6,01 | 9,11 |

**Vergleichsbeispiele 32-55**

Die Vergleichsbeispiele 32-55 sind die dort als Glas A - O, 1 - 9 bezeichneten Beispiele der US 8,753,994 B2. US 8,753,994 B2 lehrt Gläser mit guter chemischer und mechanischer Beständigkeit. Die Beispiele 7 - 9 enthalten ≥1 % $B_2O_3$ und sind nicht erfindungsgemäß. Die anderen Beispiele haben die Zusammensetzung:

**Tabelle 14**

|  |  | A | B | C | D | E | F | G | H | I | 1 | 2 | 3 |
|---|---|---|---|---|---|---|---|---|---|---|---|---|---|
| **#** | **Oxid** | **Mol%** |  |  |  |  |  |  |  |  |  |  |  |
| 1. | $SiO_2$ | 70,8 | 72,8 | 74,8 | 76,8 | 76,8 | 77,4 | 76,965 | 76,852 | 76,962 | 76,919 | 76,96 | 77,156 |
| 2. | $TiO_2$ | 0 | 0 | 0 | 0 | 0 | 0 | 0 | 0 | 0 | 0 | 0 | 0 |
| 3. | $ZrO_2$ | 0 | 0 | 0 | 0 | 0 | 0 | 0 | 0 | 0 | 0 | 0 | 0 |
| 4. | $Al_2O_3$ | 7,5 | 7 | 6,5 | 6 | 6 | 7 | 5,943 | 6,974 | 7,958 | 8,95 | 4,977 | 3,997 |
| 5. | ZnO | 0 | 0 | 0 | 0 | 0 | 0 | 0 | 0 | 0 | 0 | 0 | 0 |

(fortgesetzt)

| # | Oxid | A Mol% | B | C | D | E | F | G | H | I | 1 | 2 | 3 |
|---|---|---|---|---|---|---|---|---|---|---|---|---|---|
| 6. | MgO | 6,3 | 5,8 | 5,3 | 4,8 | 4,8 | 4,8 | 4,842 | 4,878 | 4,802 | 4,836 | 4,852 | 4,757 |
| 7. | CaO | 0,5 | 0,5 | 0,5 | 0,5 | 0,5 | 0,5 | 0,474 | 0,478 | 0,481 | 0,48 | 0,468 | 0,462 |
| 8. | SrO | 0 | 0 | 0 | 0 | 0 | 0 | 0 | 0 | 0 | 0 | 0 | 0 |
| 9. | BaO | 0 | 0 | 0 | 0 | 0 | 0 | 0 | 0 | 0 | 0 | 0 | 0 |
| 10. | $Na_2O$ | 13,7 | 12,7 | 11,7 | 10,7 | 11,6 | 10 | 11,427 | 10,473 | 9,451 | 8,468 | 12,393 | 13,277 |
| 11. | $K_2O$ | 1 | 1 | 1 | 1 | 0,1 | 0,1 | 0,101 | 0,1 | 0,102 | 0,105 | 0,1 | 0,1 |
| 12. | Rest | 0,2 ($SnO_2$) | 0,2 | 0,2 | 0,2 | 0,2 | 0,2 | 0,248 | 0,245 | 0,244 | 0,242 | 0,25 | 0,251 |

**Tabelle 15**

| # | Oxid | J Mol% | K | L | 4 | 5 | 6 | M | N | O |
|---|---|---|---|---|---|---|---|---|---|---|
| 1. | $SiO_2$ | 76,99 | 77,1 | 77,1 | 77,1 | 76,97 | 77,12 | 76,86 | 76,778 | 76,396 |
| 2. | $TiO_2$ | 0 | 0 | 0 | 0 | 0 | 0 | 0 | 0 | 0 |
| 3. | $ZrO_2$ | 0 | 0 | 0 | 0 | 0 | 0 | 0 | 0 | 0 |
| 4. | $Al_2O_3$ | 5,98 | 5,97 | 5,96 | 5,96 | 5,97 | 5,98 | 5,964 | 5,948 | 5,919 |
| 5. | ZnO | 0 | 0 | 0 | 0 | 0 | 0 | 0 | 0 | 0 |
| 6. | MgO | 5,23 | 4,79 | 3,78 | 2,83 | 1,84 | 0,09 | 4,849 | 4,827 | 4,754 |
| 7. | CaO | 0,07 | 0,45 | 1,45 | 2,46 | 3,47 | 5,12 | 0,492 | 0,48 | 0,475 |
| 8. | SrO | 0 | 0 | 0 | 0 | 0 | 0 | 0 | 0 | 0 |
| 9. | BaO | 0 | 0 | 0 | 0 | 0 | 0 | 0 | 0 | 0 |
| 10. | $Na_2O$ | 11,38 | 11,33 | 11,37 | 11,38 | 11,4 | 11,34 | 11,486 | 11,408 | 11,294 |
| 11. | $K_2O$ | 0,1 | 0,1 | 0,1 | 0,1 | 0,1 | 0,1 | 0,101 | 0,1 | 0,1 |
| 12. | Rest | 0,25 ($SnO_2$) | 0,26 | 0,24 | 0,25 | 0,25 | 0,25 | 0,25 | 0,449 ($SnO_2$+$B_2O_3$) | 0,062 |

Umrechnung in konstituierende Phasen ergibt, daß keine der Zusammensetzungen A-O, 2-6 zum erfindungsgemäßen Grundsystem gehört. Die Umrechnung in konstituierende Phasen ergibt weiter, daß das in US 8,753,994 B2 mit 1 bezeichnete Beispiel zum erfindungsgemäßen Grundsystem gehört, allerdings nicht in den erfindungsgemäßen Zusammensetzungsbereich fällt, da der Anteil an Albit zu hoch ist.

**Tabelle 16**

| | 1 |
|---|---|
| konstituierende Phase | Mol% |
| Albit | 67,74 |
| Siliziumdioxid | 19,60 |
| Orthoklas | 0,84 |
| Wollastonit | 0,96 |
| Enstatit | 8,92 |

(fortgesetzt)

| konstituierende Phase | 1 |
| --- | --- |
| | Mol% |
| Parakeldyshit | 0,00 |
| Narsarsukit | 0,00 |
| Dinatriumzinksilicat | 0,00 |
| Cordierit | 1,70 |
| Strontiumsilicat | 0,00 |
| Bariumsilicat | 0,00 |

Die berechneten Eigenschaften sind:

**Tabelle 17**

| Lfd. Nr. | ISO 695: berechnete Abtragrate/mg/( dm$^2$3h) | Kennzahl für Säurebeständigkeit: | Berechneter CTE | pH |
| --- | --- | --- | --- | --- |
| 1 | 82,84 | 200,32 | 5,81 | 8,92 |

**Vergleichsbeispiele 56-95**

Die Vergleichsbeispiele 56 - 95 sind die dort als Glas 1 - 40 bezeichneten Beispiele der EP 2 876 092 A1. Die Beispiele 1 - 30, 32, 35 - 40 enthalten ≥1% $B_2O_3$ und sind nicht erfindungsgemäß. Die anderen Beispiele haben die Zusammensetzung:

**Tabelle 18**

| # | Oxid | 31 | 33 | 34 |
| --- | --- | --- | --- | --- |
| | | Mol% | | |
| 1. | $SiO_2$ | 73,6 | 74,7 | 68,2 |
| 2. | $TiO_2$ | 0 | 0 | 0 |
| 3. | $ZrO_2$ | 0 | 0 | 0 |
| 4. | $Al_2O_3$ | 6,8 | 6,8 | 10,9 |
| 5. | ZnO | 0 | 0 | 0 |
| 6. | MgO | 4,9 | 4,9 | 0 |
| 7. | CaO | 0 | 0 | 1,2 |
| 8. | SrO | 0 | 0 | 0 |
| 9. | BaO | 0 | 0 | 0 |
| 10. | $Na_2O$ | 12,8 | 12,2 | 12,8 |
| 11. | $K_2O$ | 0,7 | 0,7 | 2 |
| 12. | Rest | 1,2 | 0,7 | 4,9 |

Die Umrechnung in konstituierende Phasen ergibt, daß keine der Zusammensetzungen 31, 33 zum erfindungsgemäßen Grundsystem gehört. Die Zusammensetzung 34 ist nur zu 95,1% angegeben; die restlichen 4,9% sind nicht spezifiziert.

**Vergleichsbeispiele 96-137**

Die Vergleichsbeispiele 96-137 sind die dort als Glas 1 - 42 bezeichneten Beispiele der WO 2014/196655 A1.

Die Beispiele 1 - 34, 38 - 42 enthalten ≥1 % $Li_2O$ und sind nicht erfindungsgemäß. Das Beispiel 35 enthält ≥1% $B_2O_3$ und ist nicht erfindungsgemäß. Die anderen Beispiele haben die Zusammensetzung:

**Tabelle 19**

| | | 36 | 37 |
|---|---|---|---|
| # | Oxid | Mol% | |
| 1. | $SiO_2$ | 76,3 | 77,9 |
| 2. | $TiO_2$ | 0 | 0 |
| 3. | $ZrO_2$ | 0 | 0 |
| 4. | $Al_2O_3$ | 6 | 6,1 |
| 5. | ZnO | 0 | 0 |
| 6. | MgO | 5 | 5,1 |
| 7. | CaO | 0,6 | 0,6 |
| 8. | SrO | 0 | 0 |
| 9. | BaO | 0 | 0 |
| 10. | $Na_2O$ | 11,8 | 6,1 |
| 11. | $K_2O$ | 0,1 | 4 |
| 12. | Rest | 0,2 | 0,2 |

Die Umrechnung in konstituierende Phasen ergibt, daß keine der Zusammensetzungen 36, 37 zum erfindungsgemäßen Grundsystem gehört.

**Vergleichsbeispiele 138-141**

Die Vergleichsbeispiele 138-141 sind die dort als Glas A1 - A4 bezeichneten Ausführungsbeispiele der DE 10 2013 114 225 A1. A2 - A3 enthalten ≥1 % F und sind nicht erfindungsgemäß. Die anderen Beispiele haben die Zusammensetzung:

**Tabelle 20**

| | | A1 | A4 |
|---|---|---|---|
| # | Oxid | Mol% | |
| 1. | $SiO_2$ | 69,5 | 68,86 |
| 2. | $TiO_2$ | 0 | 0 |
| 3. | $ZrO_2$ | 0 | 0 |
| 4. | $Al_2O_3$ | 10,5 | 12 |
| 5. | ZnO | 0 | 0 |
| 6. | MgO | 3 | 2,58 |
| 7. | CaO | 0 | 0 |
| 8. | SrO | 0 | 0 |
| 9. | BaO | 0 | 0 |
| 10. | $Na_2O$ | 15 | 14,6 |
| 11. | $K_2O$ | 2 | 1,05 |
| 12. | Rest | 0 | 0,912 (F, $B_2O_3$) |

Die Umrechnung in konstituierende Phasen ergibt, daß keine der Zusammensetzungen A1, A4 zum erfindungsgemäßen Grundsystem gehört.

**Vergleichsbeispiele 142-167**

Die Vergleichsbeispiele 142-167 sind die dort als Glas B1 - B5, V1 - V4, G1 - G17 bezeichneten Beispiele der DE 10 2009 051 852 A1. B4 enthält ≥1% F und ist nicht erfindungsgemäß. V1 - V4, G1, G3, G6, G7, G9, G12, G14 enthalten kein Natrium und sind nicht erfindungsgemäß. Die anderen Beispiele haben die Zusammensetzung:

**Tabelle 21**

| # | Oxid | B1 Mol% | B2 | B3 | B5 | G2 | G4 | G5 | G8 | G10 | G11 | G13 | G15 | G16 | G17 |
|---|---|---|---|---|---|---|---|---|---|---|---|---|---|---|---|
| 1. | $SiO_2$ | 67,5 | 72,5 | 74,3 | 67,5 | 63,42 | 64,15 | 63,17 | 67,54 | 67,9 | 67,96 | 64,47 | 63,02 | 73,93 | 65,9 |
| 2. | $TiO_2$ | 0 | 0 | 0 | 0 | 3,22 | 0 | 0 | 1,51 | 0 | 1,52 | 0 | 0 | 0 | 0 |
| 3. | $ZrO_2$ | 0 | 0 | 0 | 0 | 0 | 2,11 | 2,08 | 0,98 | 1,97 | 0,98 | 3,56 | 4,66 | 0 | 0 |
| 4. | $Al_2O_3$ | 8,7 | 9,9 | 7,4 | 8,7 | 11,99 | 12,13 | 11,95 | 10,88 | 10,94 | 10,95 | 10,45 | 10,56 | 3,03 | 11,71 |
| 5. | ZnO | 0 | 0 | 3,1 | 0 | 0 | 0 | 0 | 0 | 0 | 0 | 0 | 0 | 0 | 0 |
| 6. | MgO | 9,9 | 5 | 5 | 9,9 | 4,47 | 4,52 | 9,86 | 9,91 | 9,96 | 7,76 | 10,09 | 10,2 | 5,66 | 10,14 |
| 7. | CaO | 9,9 | 5,2 | 5,1 | 9,9 | 13,77 | 13,93 | 9,83 | 6,11 | 6,14 | 7,74 | 6,22 | 6,29 | 5,83 | 6,16 |
| 8. | SrO | 0 | 0 | 0 | 0 | 0 | 0 | 0 | 0 | 0 | 0 | 0 | 0 | 0 | 0 |
| 9. | BaO | 0 | 0 | 0 | 0 | 0 | 0 | 0 | 0 | 0 | 0 | 0 | 0 | 0 | 0 |
| 10. | $Na_2O$ | 4 | 7,3 | 5,1 | 4 | 3,12 | 3,15 | 3,1 | 3,07 | 3,09 | 3,09 | 5,21 | 5,27 | 6,97 | 6,08 |
| 11. | $K_2O$ | 0 | 0 | 0 | 0 | 0 | 0 | 0 | 0 | 0 | 0 | 0 | 0 | 4,58 | 0 |
| 12. | Rest | 0,6 ($B_2O_3$) | 0,1 | 0 | 0 | 0,01 | 0,01 | 0,01 | 0 | 0 | 0 | 0 | 0 | 0 | 0,01 |

Die Umrechnung in konstituierende Phasen ergibt, daß keine der Zusammensetzungen B3, G2, G4, G5, G11, G17 zum erfindungsgemäßen Grundsystem gehört. Die Umrechnung in konstituierende Phasen ergibt weiter, daß die in DE 10 2009 051 852 A1 mit B1, B2, B5, G10, G13, G15, G17 bezeichneten Beispiele zum erfindungsgemäßen Grundsystem gehören, allerdings nicht in den erfindungsgemäßen Zusammensetzungsbereich fallen, da der Anteil an Wollastonit zu hoch ist.

**Tabelle 22**

|  | B1 | B2 | B5 | G10 | G13 | G15 | G17 |
|---|---|---|---|---|---|---|---|
| konstituierende Phase | Mol% |  |  |  |  |  |  |
| Albit | 32,00 | 58,40 | 32,00 | 8,96 | 13,20 | 4,88 | 48,64 |
| Siliziumdioxid | 16,65 | 14,60 | 16,65 | 26,41 | 17,94 | 18,63 | 4,68 |
| Orthoklas | 0,00 | 0,00 | 0,00 | 0,00 | 0,00 | 0,00 | 0,00 |
| Wollastonit | 19,80 | 10,40 | 19,80 | 12,28 | 12,44 | 12,58 | 12,32 |
| Enstatit | 10,40 | 4,80 | 10,40 | 0,28 | 2,58 | 0,50 | 9,02 |
| Parakeldyshit | 0,00 | 0,00 | 0,00 | 7,88 | 14,24 | 18,64 | 0,00 |
| Narsarsukit | 0,00 | 0,00 | 0,00 | 0,00 | 0,00 | 0,00 | 0,00 |
| Dinatriumzinksilicat | 0,00 | 0,00 | 0,00 | 0,00 | 0,00 | 0,00 | 0,00 |
| Cordierit | 21,15 | 11,70 | 21,15 | 44,19 | 39,60 | 44,78 | 25,34 |
| Strontiumsilicat | 0,00 | 0,00 | 0,00 | 0,00 | 0,00 | 0,00 | 0,00 |
| Bariumsilicat | 0,00 | 0,00 | 0,00 | 0,00 | 0,00 | 0,00 | 0,00 |

Die berechneten Eigenschaften sind:

**Tabelle 23**

| Lfd. Nr. | ISO 695: berechnete Abtragrate/mg/( dm$^2$3h) | Kennzahl für Säurebeständigkeit: | Berechneter CTE | pH |
|---|---|---|---|---|
| B1 | 87,60 | 199,67 | 5,82 | 9,19 |
| B2 | 87,28 | 202,56 | 5,98 | 9,04 |
| B5 | 87,60 | 199,67 | 5,82 | 9,19 |
| G10 | 92,71 | 207,45 | 4,93 | 9,06 |
| G13 | 99,91 | 209,09 | 5,77 | 9,11 |
| G15 | 103,70 | 211,06 | 5,77 | 9,11 |
| G17 | 94,12 | 206,52 | 6,46 | 9,11 |

**Vergleichsbeispiele 168-183**

Die Vergleichsbeispiele 168-183 sind die dort als Glas 1-8, V1 - V8 bezeichneten Beispiele der DE 10 2015 116 097 A1. Die genannten Beispiele haben die Zusammensetzung:

**Tabelle 24**

|  |  | 1 | 2 | 3 | 4 | 5 | 6 | 7 | 8 | V1 | V2 | V3 | V4 | V5 | V6 | V7 | V8 |
|---|---|---|---|---|---|---|---|---|---|---|---|---|---|---|---|---|---|
| # | Oxid | Mol% |  |  |  |  |  |  |  |  |  |  |  |  |  |  |  |
| 1. | SiO$_2$ | 65,9 | 70,2 | 68,8 | 72,5 | 68,2 | 68 | 68,2 | 64 | 71 | 76 | 60,9 | 75,6 | 70 | 71 | 74,1 | 67,5 |
| 2. | TiO$_2$ | 0 | 0 | 0 | 0 | 0 | 1,5 | 3,1 | 0 | 0 | 0 | 0 | 0 | 0 | 0 | 0 | 0 |
| 3. | ZrO$_2$ | 0 | 0 | 0 | 0 | 1,1 | 0 | 0 | 0 | 1 | 1 | 3,7 | 0 | 0 | 0 | 0 | 0 |
| 4. | Al$_2$O$_3$ | 11,7 | 10,4 | 11,3 | 9,1 | 11,8 | 12 | 11,8 | 12 | 11 | 7 | 16,5 | 6 | 6 | 5 | 10,5 | 8,7 |

(fortgesetzt)

| # | Oxid | 1 | 2 | 3 | 4 | 5 | 6 | 7 | 8 | V1 | V2 | V3 | V4 | V5 | V6 | V7 | V8 |
|---|---|---|---|---|---|---|---|---|---|---|---|---|---|---|---|---|---|
| | | Mol% | | | | | | | | | | | | | | | |
| 5. | ZnO | 0 | 0 | 0 | 0 | 0 | 0 | 0 | 0 | 0 | 0 | 0 | 0 | 0 | 0 | 0 | 0 |
| 6. | MgO | 10,1 | 8 | 7 | 7 | 3,2 | 0 | 1,2 | 12 | 5 | 4 | 2,1 | 6,8 | 8 | 10 | 7,8 | 9,9 |
| 7. | CaO | 6,2 | 2 | 3 | 3 | 5,2 | 5 | 5,2 | 8 | 1 | 1 | 1,7 | 0,4 | 8 | 10 | 5,6 | 9,9 |
| 8. | SrO | 0 | 0 | 0 | 0 | 0 | 0 | 0 | 0 | 0 | 0 | 0 | 0 | 0 | 0 | 0 | 0 |
| 9. | BaO | 0 | 0 | 0 | 0 | 0 | 0 | 0 | 0 | 0 | 0 | 0 | 0 | 0 | 0 | 0 | 0 |
| 10. | $Na_2O$ | 6,1 | 9 | 10 | 8,5 | 10,5 | 12 | 10,5 | 4 | 10 | 10 | 12,2 | 11,2 | 8 | 4 | 2 | 4 |
| 11. | $K_2O$ | 0 | 0,5 | 0 | 0 | 0 | 0,5 | 0 | 0 | 1 | 1 | 2,9 | 0,1 | 0 | 0 | 0 | 0 |
| 12. | Rest | | | | | | | | | | | | | | | | |

Die Umrechnung in konstituierende Phasen ergibt, daß keine der Zusammensetzungen 3, 5 - 7, V2 - V5, V7 zum erfindungsgemäßen Grundsystem gehört. Die Umrechnung in konstituierende Phasen ergibt weiter, daß die in DE 10 2015 116 097 A1 mit B1, 2, 4, 8, V1, V6, V8 bezeichneten Beispiele zum erfindungsgemäßen Grundsystem gehören, allerdings nicht in den erfindungsgemäßen Zusammensetzungsbereich fallen, da der Anteil an Albit oder Wollastonit zu hoch ist.

Tabelle 25

| konstituierende Phase | 1 | 2 | 4 | 8 | V1 | V6 | V8 |
|---|---|---|---|---|---|---|---|
| | Mol% | | | | | | |
| Albit | 48,80 | 72,00 | 68,00 | 32,00 | 72,00 | 32,00 | 32,00 |
| Siliziumdioxid | 4,60 | 1,85 | 10,60 | 8,00 | 1,50 | 25,50 | 16,65 |
| Orthoklas | 0,00 | 4,00 | 0,00 | 0,00 | 8,00 | 0,00 | 0,00 |
| Wollastonit | 12,40 | 4,00 | 6,00 | 16,00 | 2,00 | 20,00 | 19,80 |
| Enstatit | 9,00 | 14,20 | 12,80 | 8,00 | 8,00 | 18,00 | 10,40 |
| Parakeldyshit | 0,00 | 0,00 | 0,00 | 0,00 | 4,00 | 0,00 | 0,00 |
| Narsarsukit | 0,00 | 0,00 | 0,00 | 0,00 | 0,00 | 0,00 | 0,00 |
| Dinatriumzinksilicat | 0,00 | 0,00 | 0,00 | 0,00 | 0,00 | 0,00 | 0,00 |
| Cordierit | 25,20 | 4,05 | 2,70 | 36,00 | 4,50 | 4,50 | 21,15 |
| Strontiumsilicat | 0,00 | 0,00 | 0,00 | 0,00 | 0,00 | 0,00 | 0,00 |
| Bariumsilicat | 0,00 | 0,00 | 0,00 | 0,00 | 0,00 | 0,00 | 0,00 |

Die berechneten Eigenschaften sind:

**Tabelle 26**

| Lfd. Nr. | ISO 695: berechnete Abtragrate/mg/( $dm^2$3h) | Kennzahl für Säurebeständigkeit: | Berechneter CTE | pH |
|---|---|---|---|---|
| 1 | 94,14 | 206,50 | 6,47 | 9,17 |
| 2 | 91,86 | 203,74 | 7,00 | 9,09 |
| 4 | 86,67 | 200,72 | 6,45 | 9,06 |
| 8 | 94,76 | 207,01 | 6,09 | 9,20 |
| V1 | 96,19 | 206,84 | 7,05 | 9,01 |
| V6 | 79,63 | 191,30 | 5,61 | 9,19 |

(fortgesetzt)

| Lfd. Nr. | ISO 695: berechnete Abtragrate/mg/( dm$^2$3h) | Kennzahl für Säurebeständigkeit: | Berechneter CTE | pH |
|---|---|---|---|---|
| V8 | 87,60 | 199,67 | 5,82 | 9,19 |

Ausführungsbeispiele der Erfindung

**Tabelle 27**

| | | A1 | A2 | A3 | A4 | A5 | A6 | A7 | A8 | A9 |
|---|---|---|---|---|---|---|---|---|---|---|
| **konstituierende Phase** | **Mol%** | | | | | | | | | |
| Albit | | 56,00 | 56,00 | 48,00 | 48,00 | 48,00 | 40,00 | 40,00 | 56,00 | 40,00 |
| Siliziumdioxid | | 20,00 | 16,50 | 15,50 | 20,00 | 20,50 | 24,00 | 28,00 | 17,50 | 29,50 |
| Orthoklas | | 0,00 | 0,00 | 4,00 | 4,00 | 4,00 | 4,00 | 4,00 | 4,00 | 4,00 |
| Wollastonit | | 4,00 | 3,00 | 3,00 | 3,00 | 3,00 | 3,00 | 0,00 | 2,00 | 2,00 |
| Enstatit | | 4,00 | 4,00 | 4,00 | 4,00 | 4,00 | 4,00 | 4,00 | 4,00 | 8,00 |
| Parakeldyshit | | 4,00 | 4,00 | 4,00 | 4,00 | 4,00 | 4,00 | 0,00 | 0,00 | 0,00 |
| Narsarsukit | | 0,00 | 0,00 | 0,00 | 0,00 | 0,00 | 0,00 | 0,00 | 0,00 | 0,00 |
| Dinatriumzinksilicat | | 10,00 | 10,00 | 15,00 | 15,00 | 10,00 | 10,00 | 15,00 | 10,00 | 10,00 |
| Cordierit | | 0,00 | 4,50 | 4,50 | 0,00 | 4,50 | 9,00 | 9,00 | 4,50 | 4,50 |
| Strontiumsilicat | | 2,00 | 2,00 | 2,00 | 2,00 | 2,00 | 2,00 | 0,00 | 2,00 | 2,00 |
| Bariumsilicat | | 0,00 | 0,00 | 0,00 | 0,00 | 0,00 | 0,00 | 0,00 | 0,00 | 0,00 |

Die berechneten Eigenschaften sind:

**Tabelle 28**

| Lfd. Nr. | ISO 695: berechnete Abtragrate /(mg/ (dm$^2$3h)) | Kennzahl für Säurebeständigkeit: | Berechneter CTE / (ppm/K) | pH |
|---|---|---|---|---|
| A1 | 87,26 | 197,32 | 6,60 | 8,98 |
| A2 | 89,80 | 199,55 | 6,74 | 9,00 |
| A3 | 92,18 | 198,27 | 7,16 | 9,04 |
| A4 | 89,06 | 196,01 | 6,94 | 9,01 |
| A5 | 88,79 | 198,38 | 6,49 | 8,99 |
| A6 | 87,89 | 198,24 | 6,19 | 8,99 |
| A7 | 83,77 | 196,26 | 6,08 | 8,94 |
| A8 | 87,98 | 199,05 | 6,54 | 8,98 |
| A9 | 81,75 | 194,27 | 5,82 | 8,98 |

Gegenüber dem Stand der Technik zeichnen sich die Gläser der vorliegenden Erfindung hinsichtlich ihrer chemischen Beständigkeit insbesondere dadurch aus, dass sie sowohl eine sehr gute Laugen- und Säurebeständigkeit als auch eine sehr gute hydrolytische Beständigkeit aufweisen.

**Patentansprüche**

1. Glas, mit einer Zusammensetzung, die durch die folgenden das Glas konstituierenden Phasen gekennzeichnet ist:

| konstituierende Phase | Min (Mol%) | Max (Mol%) |
|---|---|---|
| Albit | 20 | 60 |
| Siliziumdioxid | 0 | 40 |
| Orthoklas | 0 | 20 |
| Wollastonit | 0 | 10 |
| Enstatit | 0 | 20 |
| Parakeldyshit | 0 | 20 |
| Narsarsukit | 0 | 20 |
| Dinatriumzinksilicat | 0 | 40 |
| Cordierit | 0 | 20 |
| Strontium silicat | 0 | 10 |
| Bariumsilicat | 0 | 10 |

, wobei der Anteil weiterer Komponenten an dem Glas höchstens 1 Mol-% beträgt.

2. Glas nach Anspruch 1 mit einem Wollastonit-Anteil von höchstens 8 Mol%.

3. Glas nach mindestens einem der vorhergehenden Ansprüche mit einem Dinatriumzinksilicat-Anteil von mindestens 0,1 Mol%.

4. Glas nach mindestens einem der vorhergehenden Ansprüche, mit einer Zusammensetzung, die durch die folgenden das Glas konstituierenden Phasen gekennzeichnet ist:

| konstituierende Phase | Min (Mol%) | Max (Mol%) |
|---|---|---|
| Albit | 30 | 60 |
| Siliziumdioxid | 10 | 30 |
| Orthoklas | 0 | 5 |
| Wollastonit | 0 | 5 |
| Enstatit | 1 | 10 |
| Parakeldyshit | 0 | 5 |
| Narsarsukit | 0 | 1 |
| Dinatriumzinksilicat | 5 | 20 |
| Cordierit | 0 | 10 |
| Strontium silicat | 0 | 5 |
| Bariumsilicat | 0 | 1 |

5. Glas nach mindestens einem der vorhergehenden Ansprüche, mit einer Kennzahl für die Säurebeständigkeit von weniger als 215, einer Abtragrate nach ISO 695 von maximal 105 mg/(dm$^2$3h) und/oder einem CTE von 4 bis 8 ppm/K.

6. Glas nach mindestens einem der vorhergehenden Ansprüche, wobei sich nach Auflösung von 50 $\mu$mol des Glases in Neutralwasser ein pH-Wert von höchstens 9,1 ergibt.

7.  Verwendung eines Glases nach mindestens einem der vorhergehenden Ansprüche zur Herstellung von Behältnissen, insbesondere pharmazeutischen Behältnissen, oder von Flachglas, insbesondere Dünnglas mit einer Dicke von weniger als 2 mm, insbesondere weniger als 1 mm.

8.  Verfahren zur Herstellung eines Glases nach mindestens einem der Ansprüche 1 bis 6, mit den Schritten:

    - Schmelzen von Glasrohstoffen,
    - Abkühlen des erhaltenen Glases.

9.  Verfahren nach Anspruch 8 mit dem Schritt

    - Herstellung eines geformten Glasartikels, insbesondere mittels Down Draw, Overflow Fusion, Wiederziehen, Floaten oder einem Rohrzugverfahren.

**Claims**

1.  A glass having a composition which is **characterized by** the following phases constituting the glass:

| Constituting phase | Min. (% by mol) | Max. (% by mol) |
|---|---|---|
| albite | 20 | 60 |
| silicon dioxide | 0 | 40 |
| orthoclase | 0 | 20 |
| wollastonite | 0 | 10 |
| enstatite | 0 | 20 |
| parakeldyshite | 0 | 20 |
| narsarsukite | 0 | 20 |
| disodium zinc silicate | 0 | 40 |
| cordierite | 0 | 20 |
| strontium silicate | 0 | 10 |
| barium silicate | 0 | 10 |

, wherein the portion of further components in the glass is at most 1 % by mol.

2.  The glass according to claim 1 with a portion of wollastonite of at most 8 % by mol.

3.  The glass according to at least one of the preceding claims with a portion of disodium zinc silicate of at least 0.1 % by mol.

4.  The glass according to at least one of the preceding claims having a composition which is **characterized by** the following phases constituting the glass:

| Constituting phase | Min. (% by mol) | Max. (% by mol) |
|---|---|---|
| albite | 30 | 60 |
| silicon dioxide | 10 | 30 |
| orthoclase | 0 | 5 |
| wollastonite | 0 | 5 |
| enstatite | 1 | 10 |

(continued)

| Constituting phase | Min. (% by mol) | Max. (% by mol) |
|---|---|---|
| parakeldyshite | 0 | 5 |
| narsarsukite | 0 | 1 |
| disodium zinc silicate | 5 | 20 |
| cordierite | 0 | 10 |
| strontium silicate | 0 | 5 |
| barium silicate | 0 | 1 |

5. The glass according to at least one of the preceding claims, with a characteristic number for the acid resistance of less than 215, a removal rate according to ISO 695 of at most 105 mg/(dm$^2$3h) and/or a CTE of 4 to 8 ppm/K.

6. The glass according to at least one of the preceding claims, wherein after dissolution of 50 μmol of the glass in neutral water a pH value of at most 9.1 results.

7. A use of a glass according to at least one of the preceding claims for the production of containers, in particular pharmaceutical containers, or of flat glass, in particular thin glass having a thickness of less than 2 mm, in particular less than 1 mm.

8. A method for the production of a glass according to at least one of claims 1 to 6, with the steps:

   - melting of glass raw materials,
   - cooling of the obtained glass.

9. The method according to claim 8 with the step

   - production of a formed glass article, in particular by means of down draw, overflow fusion, redrawing, floating or a tube-drawing method.

**Revendications**

1. Verre, dont la composition est **caractérisée par** les phases suivantes constituant le verre :

| Phase constitutive | Min (% molaire) | Max (%molaire) |
|---|---|---|
| Albite | 20 | 60 |
| Dioxyde de silicium | 0 | 40 |
| Orthoclase | 0 | 20 |
| Wollastonite | 0 | 10 |
| Enstatit | 0 | 20 |
| Parakeldyshit | 0 | 20 |
| Narsarsukite | 0 | 20 |
| Silicate de zinc disodique | 0 | 40 |
| Cordiérite | 0 | 20 |
| Silicate de strontium | 0 | 10 |
| Silicate de baryum | 0 | 10 |

la proportion d'autres composants dans le verre étant d'au plus 1 % molaire.

**2.** Verre selon la revendication 1 ayant une teneur en wollastonite d'au plus 8 % molaire.

**3.** Verre selon l'une au moins des revendications précédentes ayant une teneur en silicate de zinc disodique d'au moins 0,1 % molaire.

**4.** Verre selon l'une au moins des revendications précédentes, ayant une composition qui est **caractérisée par** les phases suivantes qui constituent le verre :

| Phase constitutive | Min (% molaire) | Max (% molaire) |
|---|---|---|
| Albite | 30 | 60 |
| Dioxyde de silicium | 10 | 30 |
| Orthoclase | 0 | 5 |
| Wollastonite | 0 | 5 |
| Enstatite | 1 | 10 |
| Parakeldyshite | 0 | 5 |

| Phase constitutive | Min (% molaire) | Max (% molaire) |
|---|---|---|
| Narsarsukite | 0 | 1 |
| Silicate de zinc disodique | 5 | 20 |
| Cordiérite | 0 | 10 |
| Silicate de strontium | 0 | 5 |
| Silicate de baryum | 0 | 1 |

**5.** Verre selon l'une au moins des revendications précédentes, ayant un nombre caractéristique de résistance aux acides inférieur à 215, un taux d'abrasion selon ISO 695 de 105 mg/(dm$^2$3h) et/ou un CTE de 4 à 8 ppm/K.

**6.** Verre selon l'une au moins des revendications précédentes, dans lequel la valeur de pH, après dissolution de 50 μmol du verre dans de l'eau neutre, est d'au plus 9,1.

**7.** Utilisation d'un verre selon l'une au moins des revendications précédentes pour réaliser des récipients, en particulier des récipients pharmaceutiques, ou de verre plat, en particulier de verre mince d'une épaisseur inférieure à 2 mm, en particulier inférieure à 1 mm.

**8.** Procédé de fabrication d'un verre selon l'une au moins des revendications 1 à 6, le procédé comprenant les étapes :

- faire fondre des matières premières du verre,
- faire refroidir le verre obtenu.

**9.** Procédé selon la revendication 8, comprenant l'étape :

- fabriquer un article en verre mis en forme, notamment par étirage vers le bas, par fusion par débordement, par ré-étirage, flottage ou un procédé d'étirage de tubes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015116097 A1
- US 9783453 B2
- US 2015030827 A1
- US 9701580 B2
- US 9156725 B2
- US 9517967 B2
- US 2014050911 A1
- US 9822032 B2
- US 2015147575 A1
- US 2015140299 A1
- WO 15031427 A2

- US 2017320769 A1
- WO 17151771 A1
- US 2016251255 A1
- DE 102013114225 A1
- DE 102014119594 A1
- US 9718721 B2
- US 8753994 B2
- EP 2876092 A1
- WO 2014196655 A1
- DE 102009051852 A1

**In der Beschreibung aufgeführte Nicht-Patentliteratur**

- **CONRADT R.** Chemical structure, medium range order, and crystalline reference state of multicomponent oxide liquids and glasses. *Journal of Non-Crystalline Solids,* 15. Oktober 2004, vol. 345-346, 16-23
- **SUSANNE FAGERLUND ; PAUL EK ; MIKKO HUPA ; LEENA HUPA.** On determining chemical durability of glasses. *Glass Technol.: Eur. J. Glass Sci. Technol,* Dezember 2010, vol. 51 (6), 235-240
- *Pure Appl. Chem.,* 1969, vol. 20 (2), 133-236
- **R.H. BYRNE.** Inorganic speciation of dissolved elements in seawater: the influence of pH on concentration ratios. *Geochem. Trans.,* 2002, vol. 3 (2), 11-16
- **DAVID W. HENDRICKS.** Water Treatment Unit Processes: Physical and Chemical. CRC Taylor and Francis, 2006, 307
- **ARTUR KREZEL ; WOLFGANG MARET.** The biological inorganic chemistry of zinc ions. *Archives of Biochemistry and Biophysics,* 2016, 1-17
- Wie bei Bariumhydroxid. *Pure Appl. Chem.,* 1969, vol. 20 (2), 133-236
- **R. BRÜNING.** On the glass transition in vitreous silica by differential thermal analysis measurements. *Journal of Non-Crystalline Solids,* 2003, vol. 330, 13-22
- **ALBERTO GARCIA ; MARVON COHEN.** *First Principles Ionicity Scales, Phys. Rev. B,* 1993
- *Albit: American Mineralogist,* 1976, vol. 61, 1213-1225
- *American Mineralogist,* 1977, vol. 62, 921-931

- *American Mineralogist,* 1979, vol. 64, 409-423
- *American Mineralogist,* 1996, vol. 81, 1344-1349
- **ORTHOKLAS.** *Canadian Mineralogist,* 1979, vol. 17, 515-525
- **WOLLASTONIT.** *Mineralogical Society of America, Special Paper,* 1963, vol. 1, 293-302
- **ENSTATIT.** *Canadian Mineralogist,* 1999, vol. 37, 199-206
- *Parakeldyshit: Acta Chemica Scandinavia,* 1997, vol. 51, 259-263
- **NARSARSUKIT.** *American Mineralogist,* 1962, vol. 47, 539
- *Dinatriumzinksilicat: Acta Cryst,* 1977, vol. B33, 1333-1337
- *Cordierit: American Mineralogist,* 1992, vol. 77, 407-411
- *Strontiumsilicat: Acta Cryst,* 1997, vol. C53, 534-536
- Erdalkalisilikat basierenden Leuchtstoffen. Dissertation, Physik. Universität Augsburg, 2007
- **C.P. RODRIGUEZ ; J.S. MCCLOY ; M.J. SCHWEIGER ; J.V. CRUM ; A, WINSCHELL.** Optical Basicity and Nepheline Crystallization in High Alumina Glasses. *Pacific Northwest National Laboratories*
- **O.L. ANDERSON ; D.A. STUART.** Calculation of Activation Energy of Ionic Conductivity in Silica Glasses by Classical Methods. *Journal of the American Ceramic Society,* 1954, vol. 37 (12), 573-580
- *Orthoklas: Canadian Mineralogist,* 1979, vol. 17, 515-525

- *Wollastonit: Mineralogical Society of America, Special Pape,* 1963, vol. 1, 293-302
- *Enstatit: Canadian Mineralogist,* 1999, vol. 37, 199-206
- *Narsarsukit: American Mineralogist,* 1962, vol. 47, 539
- *Dinatriumzinksilicat: Acta Cryst.,* 1977, vol. B33, 1333-1337
- *Strontiumsilicat: Acta Cryst.,* 1997, vol. C53, 534-536
- **T. GEISLER ; A. JANSSEN ; D. SCHEITER ; T. STEPHAN ; J. BERNDT ; A. PUTNIS.** Aqueous corrosion of borosilicate glass under acidic conditions: A new corrosion mechanism. *Journal of Non-Crystalline Solids,* 2010, vol. 356, 1458-1465
- Einführung in die Materialwissenschaft I. **H. FÖLL.** Skript zur Vorlesung. Christian Albrechts-Universität Kiel, 79-83
- *Journal of Non-Crystalline Solids,* 2017, vol. 455, 70-74
- *Geochimica et Cosmochimica Acta,* 1963, vol. 27, 107-120
- **G. RAABE ; M.H. MLADECK.** *Parakeldyshit from Norway, Canadian Mineralogist,* 1977, vol. 15
- **D.R.PEACOR ; M.J. BUERGER.** The Determination and Refinement of the Structure of Narsarsukite, Na2TiOSi4O. *American Mineralogist,* 1962, vol. 67 (5-6), 539-556
- **K. ABRAHAM ; O. W. FLÖRKE ; K. KRUMBHOLZ.** Hydrothermaldarstellung und Kristalldaten von K2TiSi3O9, K2TiSi4O11, K2TiSi6O15, K2ZrSi3O9 und K2O·4SiO2·H2O. *Fortschr. Mineral,* 1971, vol. 49, 5-7
- **K.-F. HESSE ; F. LIEBAU ; H. BÖHM.** Disodiumzincosilicate, Na2ZnSi3O. *Acta. Cryst.,* 1977, vol. B33, 1333-1337
- **W.A. DOLLASE ; C.R. ROSS II.** Crystal Structure, of K2ZnSi3O. *Zeitschrift für Kristallographie,* 1993, vol. 206, 25-32
- *Ceramics International,* 1996, vol. 22, 73-77